# FASCICULE DE BREVET EUROPEEN

(11) **EP 0 351 319 B1**
(45) Date de publication et mention de la délivrance du brevet: **17.02.1993**
(21) Numéro de dépôt: 89402018.9
(22) Date de dépôt: 13.07.1989
(51) Int. Cl.: E03C 1/10, F16K 24/02

(54) **Organe de commande pour fluide et appareil de protection contre les retours de fluide le comportant**
Flüssigkeitssteuerungseinrichtung und mit einer solchen Einrichtung ausgestatteter Rückflussverhinderer
Fluidum actuating device and back flow preventer containing same

(30) Priorité: 15.07.1988 FR 8809643
(43) Date de publication de la demande: 17.01.1990
(73) Titulaire: SOCLA, F-71107 Chalon s/Saone Cédex (FR)
(72) Inventeur: Bouilloux, Christian, F-71700 Tournus (FR); Marmol, Pierre, F-71100 Chalon S/Saone (FR); Richard, Jean, F-71380 Saint Marcel (FR)
(74) Mandataire: Rinuy, Santarelli

(56) Documents cités:
- WO-A-84/02547
- FR-A- 641 679
- FR-A- 703 758
- GA-B- 1 151 215
- GB-A- 586 166
- GB-A- 2 064 730
- US-A- 3 459 212

## Description

La présente invention se rapporte à un organe de commande pour fluide, destiné à être disposé entre un réseau d'alimentation en fluide et une installation de consommation, comportant : un corps muni d'au moins une première voie destinée à être raccordée à une conduite réseau, et une deuxième voie destinée à être raccordée à une conduite installation ; un obturateur mobile dans ce corps, admettant une position de fermeture où il obture lesdites voies, et une position passante où ces voies sont mises en communication par une tubulure que présente cet obturateur; et des moyens d'étanchéité pour produire par contact des zones assurant respectivement, en position de fermeture, l'étanchéité de l'obturation de chacune des première et deuxième voies. Un tel organe est connu par exemple de GB-A-1 151 215.

En cas de défaut d'étanchéité dans les réalisations classiques de ce genre d'organe, le fluide parvient aussi à passer entre les deux voies en position de fermeture.

L'invention vise à résoudre le problème de trouver un organe qui ne présente pas cet inconvénient. Elle propose à cet effet un organe du même genre mais qui se caractérise en ce qu'il comporte en outre : une chambre munie d'un orifice débouchant à l'air libre, pour la mettre à l'atmosphère et pour évacuer des fuites éventuelles auxdites zones d'étanchéité, ladite chambre étant située entre lesdites zones d'étanchéité quand l'obturateur est en position de fermeture; ainsi qu'un clapet de non-retour disposé sur chacune desdites première et deuxième voies, se fermant vers le réseau ou s'ouvrant vers l'installation.

Si l'une des zones d'étanchéité fuit, les fuites devraient passer par la chambre pour rejoindre l'autre zone d'étanchéité puis franchir celle-ci pour que le fluide passe entre les deux voies. Mais du fait de l'orifice dont est munie cette chambre, le fluide qui y est éventuellement présent est à la pression atmosphérique, il ne peut donc franchir la deuxième zone d'étanchéité, il est en fait récupéré dans la chambre et évacué par l'orifice de celle-ci. Cet orifice est de préférence situé en partie basse de la vanne, pour qu'il ne reste pas de fluide dans son fond et, suivant les risques que pourraient présenter les fuites pour le local où est installée la vanne, on peut prévoir un récupérateur (c'est-à-dire une sorte d'entonnoir) pour les fuites évacuées, avec mise à l'égoût.

Un tel organe est particulièrement avantageux sur le plan de la sécurité, car il permet d'isoler de façon totalement fiable deux circuits qu'il faut connecter dans certaines circonstances, mais dont les fluides ne doivent autrement pas se mélanger.

Il peut s'agir par exemple du réseau d'alimentation en eau potable et du circuit d'eau d'une installation de chauffage central, qui doivent être isolés en dehors de la période de remplissage du circuit de chauffage : il faut éviter un surremplissage de ce dernier par le réseau, et surtout éviter impérativement que l'eau du circuit de chauffage ne passe dans le réseau d'eau potable qui serait alors pollué. On notera que les risques que se produise un tel incident sont relativement élevés, du fait des surpressions susceptibles de se produire dans le circuit de chauffage en cas de surchauffe.

Un tel organe de commande est particulièrement avantageux puisqu'il réalise non seulement une fonction de mise en communication et d'isolation de réseau et de l'installation, par manoeuvre de l'obturateur, mais aussi une fonction de disconnexion, en position de fermeture, et une protection contre les retours en position passante.

Le corps comporte en outre avantageusement, pour offrir une sécurité supplémentaire en position passante, une voie de montage d'un clapet casse-vide, et l'obturateur comporte une tubulure adaptée à relier, dans la position passante, cette voie de montage d'un casse-vide avec les première et deuxième voies.

Dans un organe de commande comportant une telle vanne et son casse-vide (c'est-à-dire un clapet ayant un côté à l'air libre), la tubulure est mise à l'atmosphère lorsque l'obturateur est en position passante entre la première et la deuxième voie et que le casse-vide est ouvert.

Ce dernier peut être simple, c'est-à-dire qu'il s'ouvre lorsque, en position passante, la pression dans la tubulure est inférieure à la pression atmosphérique. Ainsi, lorsque la vanne est en position passante, le casse-vide s'ouvre s'il y a une dépression accidentelle dans le réseau d'alimentation en eau potable pour l'exemple précédent.

Le casse-vide peut également être différentiel, c'est-à-dire qu'il réagit à une différence de pression, de préférence entre les pressions de la tubulure et de la conduite réseau.

Plus précisément, dans ce cas, un clapet de non-retour est monté sur la première voie, et le casse-vide est destiné à être relié à la conduite réseau en amont dudit clapet de non-retour, le casse-vide comportant des moyens pour s'ouvrir lorsque, en position passante, la pression dans la tubulure est supérieure à la pression dans la conduite réseau.

Si le fluide tend à passer de l'installation vers le réseau et que le clapet de non-retour de la voie installation est défectueux, le clapet de non-retour de la voie réseau se ferme et la pression dans la tubulure devient supérieure à la pression dans la conduite réseau, ce qui ouvre le casse-vide.

Il est également possible d'utiliser un casse-vide différentiel réagissant à la différence entre les pressions des conduites réseau et installation, relié à ces conduites respectivement en amont ou en aval du clapet de non-retour monté sur la première ou sur la seconde voie.

Dans les deux cas le casse-vide différentiel s'ouvre si l'équilibre des pressions est anormal, en particulier, dans l'exemple précédent, si la pression du cicuit d'eau de chauffage devient supérieure à celle du réseau d'alimentation en eau potable, à la suite d'une dépression accidentelle dans le réseau d'eau potable ou une surpression anormale dans le circuit de chauffage.

Donc, l'organe de commande comportant un clapet de non-retour sur chacune des voies installation et réseau, on a les conditions de la disconnexion en position passante, dans les circonstances susceptibles de provoquer un retour du fluide. On est donc protégé d'un tel retour, que l'obturateur de la vanne soit en position de fermeture, ou en position passante.

En fonction de l'utilisation qu'on veut faire de l'organe selon l'invention, celui-ci peut être réalisé avec plus de deux voies destinées à être raccordées à une conduite de fluide, avec ou sans voie de montage d'un casse-vide.

Le corps comporte par exemple une troisième voie destinée à être raccordée à un conduite de fluide, l'obturateur comporte une tubulure adaptée à ce que cette troisième voie soit également obturée dans la position de fermeture, et à ce que l'obturateur admette de part et d'autre de la position de fermeture une position passante où ladite deuxième voie est respectivement mise en communication avec la première ou la troisième voie, tandis qu'est respectivement obturée la première ou la troisième voie; et ladite chambre est également disposée, en position de fermeture, entre au moins les zones assurant respectivement l'étanchéité de la première et de la troisième voies ou celles assurant respectivement l'étanchéité de la deuxième voie et de la troisième voie.

Cette réalisation peut être utilisée par exemple en connectant la première voie à une conduite d'un réseau d'alimentation en eau potable, la deuxième voie à une conduite d'une installation d'utilisation, et la troisième voie à une conduite de branchement sur un puits : en position de fermeture les trois conduites sont obturées; dans une première position passante, la conduite réseau et la conduite installation sont mises en communication tandis qu'est obturée la conduite puits; et dans la deuxième position passante, la conduite puits et la conduite installation sont mises en communication tandis qu'est obturée la conduite réseau. L'installation est donc alimentée en position passante soit par le réseau, soit par le puits.

La chambre, qui se situe de toutes façons entre les voies réseau et installation, si elle est aussi entre les voies reseau et puits, protège le réseau en position de fermeture, non seulement de l'installation, mais aussi du puits, qui peuvent tous deux polluer le réseau.

Si la chambre est aussi entre les voies installation et puits on protège ceux-ci, et si toutes les voies sont séparées l'une de l'autre par la chambre, la protection est globale, le fluide ne parviendra à passer entre aucune paire prise parmi les voies pour fluide de l'organe.

L'organe qui vient d'être exposé peut aussi être associé à des moyens complémentaires, pour obtenir un appareil de protection contre les retours de fluide, qui forme également un des aspects de l'invention.

L'appareil auquel se rapporte l'invention sous cet aspect se caractérise en ce qu'il comporte un organe tel qu'exposé précédemment; ainsi qu'un système d'asservissement de l'obturateur, destiné à être relié respectivement en amont ou en aval du clapet de non-retour sur la première ou sur la deuxième voie, comportant des moyens pour faire passer l'obturateur en position de fermeture lorsque la pression dans la conduite installation est supérieure à la pression dans la conduite réseau.

Au cas où le fluide tend à passer de l'installation vers le réseau, les clapets de non-retour montés sur chacune des voies installation ou réseau se ferment et la pression dans la conduite installation devient supérieure à la pression dans la conduite réseau, ce qui fait passer l'obturateur en position de fermeture.

Dans ces circonstances, compte-tenu des caractéristiques de l'organe, l'appareil réalise une disconnexion entre le réseau et l'installation, c'est-à-dire que sont fermées à la fois sa voie installation et sa voie réseau tandis que la portion de l'appareil situé entre les zones de fermeture est ouverte sur l'air libre.

L'appareil de protection selon l'invention offre l'avantage de remplir sa fonction avec une structure particulièrement simple et économique, tout en offrant un niveau de sécurité particulièrement élevé.

Les caractéristiques, particularités et avantages de l'invention apparaîtront au cours de la description d'exemples de réalisation, donnée ci-après à titre d'exemples non limitatifs en référence aux dessins annexés. Sur ceux-ci :
- les figures 1 et 2 sont des vues en coupe, respectivement en plan et en élévation, indiquées en I-I sur la figure 2 et en II-II sur la figure 1, d'une vanne à deux voies conforme à l'invention, où le corps est un boisseau et l'obturateur un tournant, en position de fermeture;
- les figures 3 et 4 sont des vues en coupe, respectivement en plan et en élévation, indiquées en III-III sur la figure 4 et en IV-IV sur la figure 3, d'une vanne à deux voies conforme à l'invention où le corps est un cylindre et l'obturateur un piston, en position de fermeture ;
- la figure 5 est une vue en élévation d'une autre vanne à deux voies conforme à l'invention où le corps est un cylindre et l'obturateur un piston, en position de fermeture ;
- les figures 6 et 7 sont les vues en coupe indiquées respectivement en VI-VI et en VII-VII sur les figures 5 et 6, la patte 22 n'ayant pas été représentée sur la figure 7 ;
- les figures 8 à 10 sont des vues similaires à la figure 6, d'une variante à trois voies de la vanne des figures 5 à 7, respectivement dans une première position passante, en position de fermeture et dans une deuxième position passante ;
- les figures 11 et 12 sont des vues en coupe, respectivement en plan et en élévation, indiquées en XI-XI sur la figure 12 et en XII-XII sur la figure 11, d'un organe de commande pour fluide conforme à l'invention, comportant une variante à trois voies de la vanne des figures 1 et 2 et deux clapets de non-retour, en position de fermeture ;
- les figures 13 et 14 montrent schématiquement les deux positions passantes de cette vanne;
- la figure 15 illustre de façon similaire à la figure 1 un organe de commande pour fluide comportant une variante de la vanne des figure 1 et 2 qui est munie d'une voie de montage d'un casse-vide; d'un clapet de non-retour sur chacune des voies pour fluide; et d'un casse-vide simple.
- la figure 16 montre de la même façon que la figure 15 une variante de l'organe de la figure 15 où le casse-vide est différentiel, avec un asservissement à la différence entre les pressions de la tubulure et de la conduite réseau, la demi-coupe de gauche montrant le casse-vide en position fermée tandis que celle de droite le montre ouvert ;
- la figure 17 est une vue de détail illustrant ce casse-vide à plus grande échelle ;
- la figure 18 est une coupe partielle en élévation indiquée en XVIII-XVIII sur la figure 16, à plus grande échelle ;
- les figures 19 et 20 illustrent de façon similaire aux figures 16 et 17, une autre variante de l'organe de commande pour fluide où le casse-vide est asservi à la différence entre les pressions de la conduite réseau et de la conduite installation ;
- la figure 21 est une vue similaire à la figure 11, pour une variante de vanne comportant en outre une voie de montage d'un casse-vide ;
- la figure 22 est une vue partielle d'une variante de la vanne des figures 3 et 4, munie d'une voie de montage d'un casse-vide ;
- la figure 23 est une vue similaire pour la vanne des figures 5 à 7 pour celle des figures 8 à 10 ;
- la figure 24 est aussi une vue similaire, pour la vanne des figures 8 à 10 ;
- les figures 25 et 26 montrent un appareil de protection contre les retours de fluide, comportant respectivement la vanne des figures 1 et 2 ou celle des figures 5 à 7, sans volant ou poignée de commande ; un système d'asservissement de son obturateur à la différence de pression dans les conduites; et un clapet de non-retour sur chacune des voies pour fluide, et
- la figure 27 est une coupe en élévation, indiquée en XXVII-XXVII sur la figure 26.

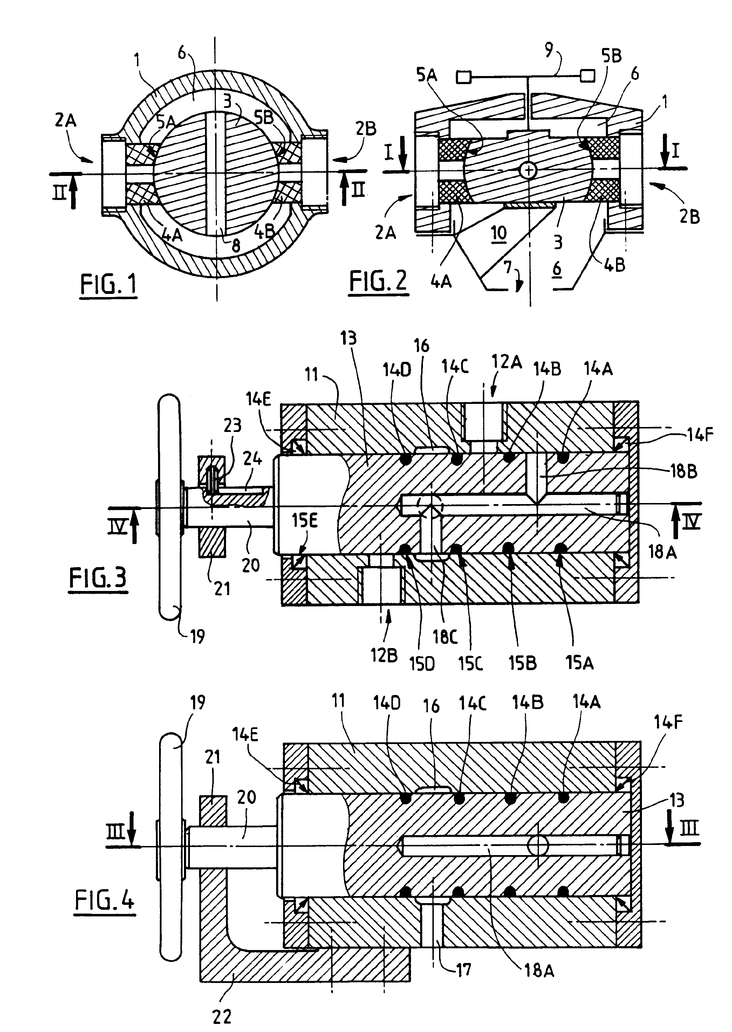

Dans la vanne montrée sur les figures 1 et 2, le corps est un boisseau 1 muni d'un première et d'une deuxième voies 2A et 2B, destinées à être raccordées à une conduite de fluide, et l'obturateur est un tournant 3 monté dans le boisseau par des manchons 4A et 4B coaxiaux aux voies 2A et 2B. Dans la position représentée, le tournant est dans une position de fermeture où il obture ces voies, l'étanchéité de l'obturation étant assurée par les zones de contact respectives 5A et 5B entre les manchons 4A ou 4B et l'obturateur. Du fait que les manchons présentent une saillie importante par rapport à la paroi intérieure du boisseau, en comparaison des vannes à boisseau et tournant classiques, il règne entre le boisseau et le tournant un espace qui forme une chambre 6 disposée en position de fermeture entre les zones d'étanchéité 5A et 5B. Cette chambre est munie d'un orifice 7 débouchant à l'air libre, pour la mettre à l'atmosphère et pour évacuer les fuites éventuelles aux zones 5A et 5B ainsi que précédemment exposé.

Par rotation d'un quart de tour à partir de la position représentée, le tournant est mis dans une position passante où la tubulure diamétrale 8 qu'il comporte met en communication les voies 2A et 2B. La manoeuvre s'effectue en agissant sur un volant de commande 9 situé sur le dessus de la vanne, et lié au tournant 3, des butées (non représentées) étant prévues pour bien positionner ce dernier en position passante ou en position de fermeture. On observera qu'un huitième de tour est suffisant pour faire passer le tournant de l'une à l'autre de ces positions.

L'orifice 7 de la chambre 6 se situe en partie basse de la vanne afin qu'il ne reste pas de fluide dans le fond de celle-ci. Le tournant est sphérique (ou plus précisément en portion de sphère), et une patte 10 est prévue pour le soutenir.

On notera que, conformément à une caractéristique préférée de l'invention, les manchons 5A et 5B ont une épaisseur au moins égale au diamètre de la tubulure 8.

Cela offre l'avantage d'éviter que la tubulure, lors du passage de l'une à l'autre des positions passante et de fermeture, ne soit simultanément en regard de la chambre 6 et de l'une des voies, ce qui provoquerait un écoulement de fluide des voies vers la chambre.

Ici, on a mis en oeuvre cette caractéristique en donnant à la tubulure un diamètre particulièrement réduit, notamment par rapport à celui des vannes à tournant classiques.

Dans la vanne illustrée sur les figures 3 et 4, le corps est un cylindre 11 muni d'une première et d'une deuxième voies 12A et 12B ménagées dans la paroi latérale du cylindre, axialement décalées l'une par rapport à l'autre, destinées à être raccordées à une conduite de fluide, et l'obturateur est un piston 13 coulissant dans ledit cylindre, présentant sur sa paroi latérale de part et d'autre de chacun des orifices de sa tubulure, des gorges annulaires dans chacune desquelles est disposé un joint torique, 14A à 14D, le cylindre étant fermé à ses extrémités par des embouts munis chacun d'un joint à lèvres, respectivement 14E et 14F. La vanne est représentée en position de fermeture, où le piston obture les voies 12A et 12B, l'étanchéité de l'obturation se faisant aux zones de contact 15B et 15C entre les joints toriques 14B et 14C et la paroi d'alésage du cylindre, pour la voie 12A, et aux zones 15D et 15E correspondant aux joints 14D et 14E pour la voie 12B. La paroi d'alésage du cylindre présente un évidement annulaire entre les voies 12A et 12B, qui forme une chambre 16 disposée en position de fermeture entre les zones 15C et 15D. Cette chambre est munie d'un orifice 17 débouchant à l'air libre, pour la mettre à l'atmosphère et pour évacuer les fuites éventuelles aux zones 15C et 15D, ainsi que précédemment exposé.

Par translation vers la gauche (ainsi qu'on voit la vanne sur les figures 3 et 4), le piston est mis dans une position passante où sa tubulure, qui comporte une portion axiale 18A à laquelle se raccordent deux portions radiales 18B et 18C, met en communication les voies 12A et 12B. La manoeuvre s'effectue en agissant sur une poignée de commande 19 coaxiale à la vanne, liée au piston 13 par une tige 20 qui coulisse dans un oeil 21 fixé au cylindre par une patte 22. Dans l'oeil est monté un pion 23 coopérant avec une rainure 24 de la tige 20, d'une part pour maintenir son positionnement angulaire, et d'autre part pour bien positionner le piston axialement, par venue en butée du pion 23 aux extrémités de la rainure, la position passante de la vanne correspondant ainsi à la venue en butée du pion à l'extrémité opposée à celle représentée en butée.

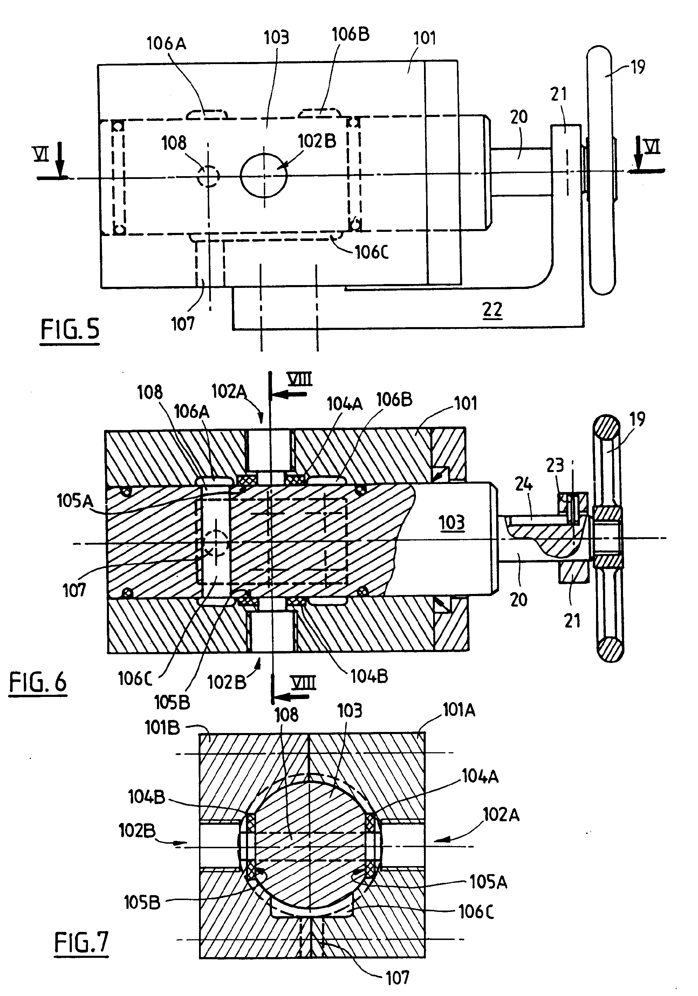

Dans la vanne illustrée sur les figures 5 à 7, le corps est un cylindre 101 dans la paroi latérale duquel les première et deuxième voies destinées à être raccordées à une conduite de fluide 102A et 102B sont ménagées diamètralement opposées et l'obturateur est un piston 103 coulissant dans ledit cylindre. Celui-ci comporte pour chacune des voies 102A et 102B, un lamage coaxial aux voies, dans lequel est disposé un joint annulaire 104A et 104B, par lequel débouchent respectivement les voies, et contre lequel glisse le piston 103. La vanne est représentée en position de fermeture, où le piston obture les voies 102A et 102B, l'étanchéité de l'obturation se faisant aux zones de contact 105A et 105B entre un méplat du cylindre 103 et les joints 104A et 104B. La paroi d'alésage du cylindre 101 présente un évidement annulaire 106A et 106B de part et d'autre des voies 102A et 102B ainsi qu'un évidement longitudinal inférieur 106C dans lequel débouchent les évidements 106A et 106B ainsi qu'un orifice de mise à l'air libre 107. Les évidements 106A à 106C forment donc une chambre disposée en position de fermeture entre les zones 105A et 105B, qui met à l'atmosphère et évacue les fuites éventuelles qui pourraient s'y produire, ainsi que précédemment exposé.

Par translation vers la droite (ainsi qu'on voit la vanne sur les figures 5 et 6), le piston 103 est mis dans une position passante où sa tubulure diamètrale 108 met en communication les voies 102A et 102B. L'ensemble de manoeuvre avec butées de positionnement est similaire à celui de la vanne des figures 3 et 4.

On notera, ainsi qu'on le voit sur la figure 7, que pour faciliter sa fabrication, le cylindre 101 est composé de deux demi-cylindres 101A et 101B réunis ensemble.

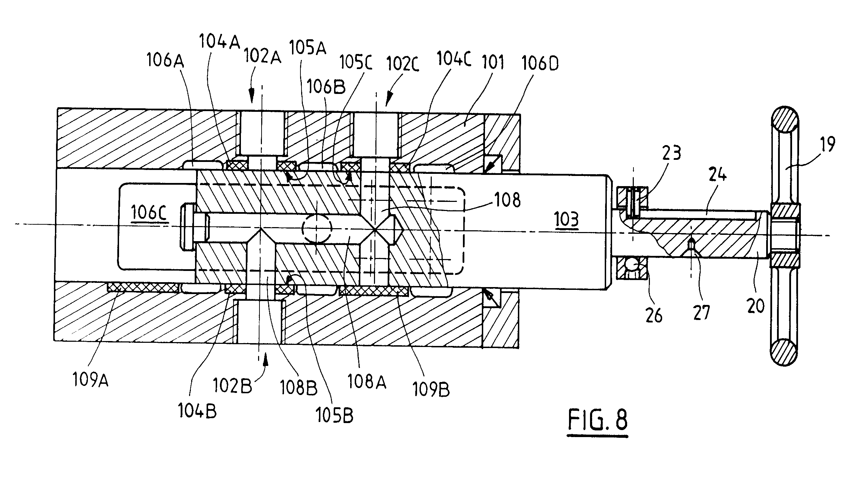

Dans la variante montrée sur les figures 8 à 10, le cylindre 101 comporte en outre une troisième voie 102C destinée à être raccordée à une conduite de fluide, axialement décalée par rapport aux voies 102A et 102B, située à leur opposé par rapport à l'évidement 106B, un troisième évidement annulaire 106D étant ménagé de l'autre côté de la troisième voie 102C ; et la tubulure du piston comporte une portion diamétrale 108 à laquelle se raccorde une portion axiale 108A à laquelle se raccorde une portion radiale 108B.

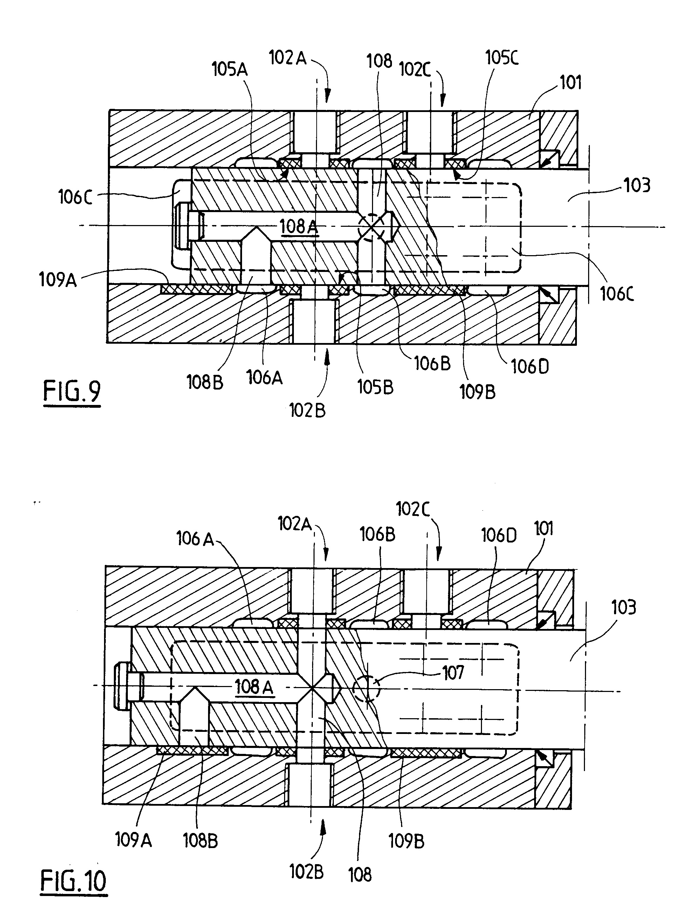

Dans la position de fermeture (montrée sur la figure 9), les orifices de la portion diamètrale 108 se placent en regard de l'évidement annulaire 106B tandis que l'orifice de la portion radiale se place en regard de l'évidement 106A. Les trois voies 102A à 102C sont donc obturées, l'étanchéité étant assurée par les zones 105A et 105B pour les voies 102A et 102B, et par une zone 105C pour la voie 102C, un joint 104C similaire aux joints 104A et 104B étant prévu sur cette voie.

De part et d'autre de cette position de fermeture, le piston 103 admet une position passante où la voie 102B est mise en communication avec la voie 102A tandis qu'est obturée la voie 102C (figure 10), ou avec la voie 102C tandis qu'est obturée la voie 102A (figure 8).

On passe de la position de fermeture à l'une des positions passantes par translation du piston d'un demi-écart entre les voies 102A (ou 102B) et 102C, vers la droite ou vers la gauche, suivant la position passante que l'on désire, en agissant sur la poignée 19.

L'oeil 21 comporte en outre une bille d'indexage 26 montée sur ressort, et la tige 20 un trou correspondant 27 situé à mi-course : lorsque la bille 26 est dans le trou 27, on est en position de fermeture, tandis que l'on est dans une position passante lorsque le pion 23 est en butée sur l'une des extrémités de la rainure 24.

On notera que des pastilles 109A et 109B, comparables aux joints 104A à 104C mais sans trou central, sont prévues pour assurer l'étanchéité de l'obturation de l'orifice de la tubulure inutilisé, dans chacune des positions passantes.

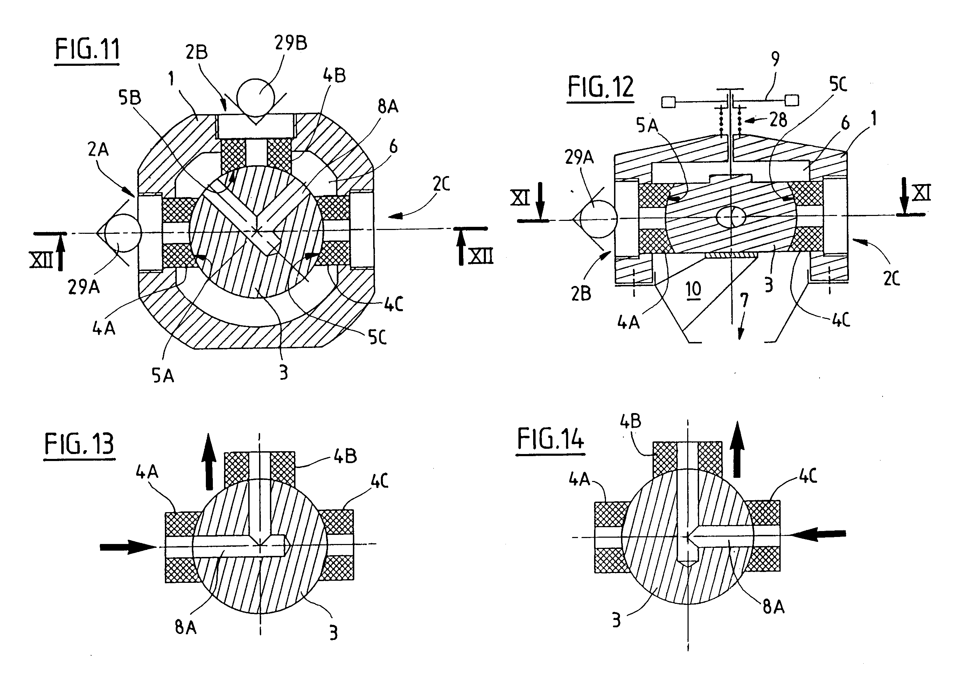

Dans la variante de la vanne des figures 1 et 2 illustrée sur les figures 11 à 14, le boisseau 1 comporte en outre une troisième voie 2C destinée à être raccordée à une conduite de fluide, la première et la troisième voies 2A et 2C étant diamétralement opposées, suivant un premier diamètre, et la deuxième voie étant disposée suivant un diamètre transversal audit premier diamètre ; un manchon 4C est prévu pour la voie 2C, et la tubulure 8A du tournant 3 est en L.

En position de fermeture (figures 11 et 12), chacun des orifices de cette tubulure est respectivement disposé entre la deuxième et la première voies 2B et 2A, et entre la deuxième et la troisième voies 2B et 2C.

Les trois voies 2A à 2C sont obturées, l'étanchéité étant assurée par les contacts tournant-manchons respectifs. On notera que dans cette position, la chambre est disposée entre les zones 5A et 5B assurant l'étanchéité de l'obturation de la première et de la deuxième voies, entre les zones 5A et 5C assurant celle des première et troisième voies, et aussi entre les zones 5B et 5C assurant celle des deuxième et troisième voies.

De part et d'autre de cette position de fermeture, le tournant 3 admet une position passante où la voie 2B est mise en communication avec la voie 2A tandis qu'est obturée la voie 2C (figure 13), ou mise en communication avec la voie 2C tandis qu'est obturée la voie 2A (figure 14).

On passe de la position de fermeture à l'une des positions passantes par rotation du tournant d'un huitième de tour dans un sens ou dans l'autre, suivant la position passante que l'on désire, en agissant sur la poignée de commande 9. Un dispositif d'indexage 28 équivalent au système de la vanne des figures 8 à 10 est prévu pour que le tournant soit en butée dans chacune des positions passantes, et indexé à mi-course, c'est-à-dire en position de fermeture.

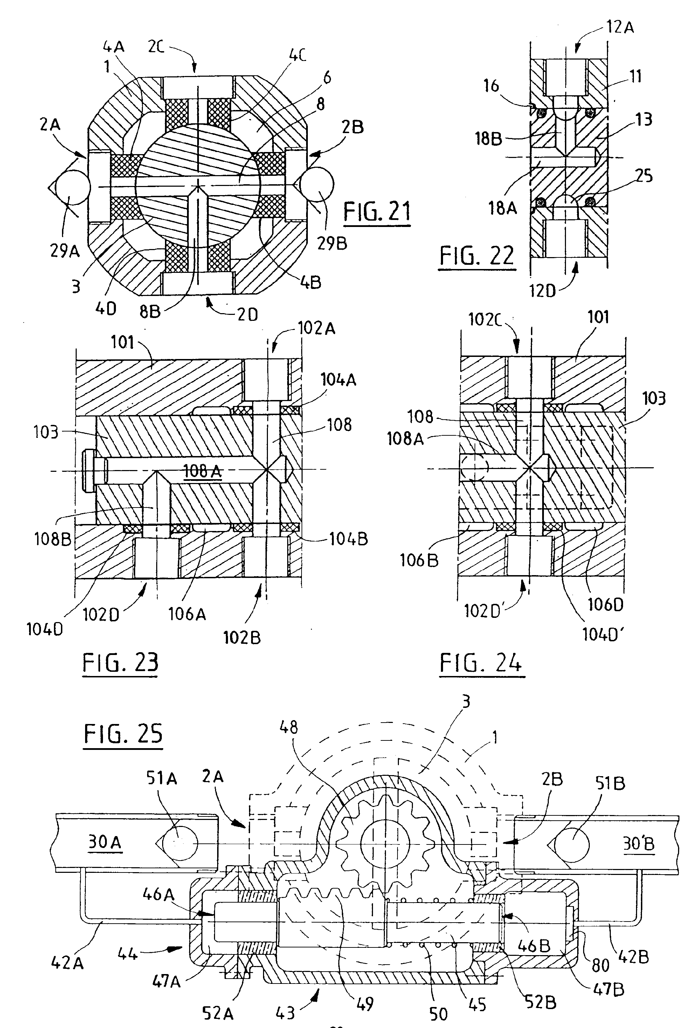

On remarquera que dans chacune des vannes qui viennent d'être exposées, l'obturateur est monté dans le corps de façon à garder le contact, lorsqu'on le déplace, avec le pourtour des orifices par lesquels débouchent respectivement dans le corps au moins les première et deuxième voies. Cela offre l'avantage d'éviter qu'une particule présente dans le fluide ne vienne s'interposer entre l'obturateur et le pourtour d'un orifice, empêchant la fermeture de la vanne, avantage particulièrement appréciable dans le cas où la fermeture de la vanne doit se faire automatiquement, comme dans les appareils de protection contre les retours de fluide qui seront décrits ultérieurement en regard des figures 25 à 27.

Les vannes qui viennent d'être décrites sont réversibles, c'est-à-dire que le fluide peut circuler à travers celles-ci dans un sens ou dans l'autre ; il est donc possible de les disposer entre des circuits où le fluide est susceptible de circuler dans les deux sens.

Il est par conséquent nécessaire de compléter la vanne avec des moyens de non-retour lorsqu'on veut l'utiliser comme organe de commande entre des circuits pour lesquels le fluide ne doit impérativement circuler que dans un seul sens, par exemple entre une réseau d'alimentation en eau potable et une installation de consommation, une conduite réseau étant branchée sur la première voie 2A, 12A ou 102A, et une conduite installation sur la deuxième voie 2B, 12B ou 102B, l'installation étant susceptible de polluer le réseau d'eau potable.

Ainsi, dans l'organe de commande pour fluide représenté sur les figures 11 à 14, dont la troisième voie 2C est par exemple branchée sur un puits, un clapet de non-retour 29B est disposé sur la voie 2B (installation), s'ouvrant vers l'installation. Le fluide ne peut donc circuler que vers l'installation en position passante de la vanne, c'est-à-dire du réseau vers l'installation dans la première position passante (figure 13) ou du puits vers l'installation dans la deuxième position passante (figure 14).

Pour éviter les risques de retour vers le réseau, on a également prévu un clapet de non-retour 29A disposé sur la voie 2A (réseau), se fermant vers le réseau. Il y a donc une double sécurité en ce qui concerne les retours qui proviendraient de l'installation. On notera qu'il est également possible, suivant les conditions de sécurité recherchées, de prévoir aussi un clapet de non-retour sur la voie 2C, se fermant vers le puits, ou à l'inverse seulement un clapet sur l'une des voies 2A, 2B ou 2C.

La vanne illustrée sur les figures 8 à 10 peut être utilisée de façon similaire, ses voies 102A, 102B et 102C correspondant aux voies 2A, 2B et 2C ; et être combinée de même à un ou plusieurs clapets de non-retour.

On notera, dans les deux réalisations, qu'en position de fermeture les chambres 6 et 106A à 106D permettent d'éviter que ne passe dans le réseau (voie 2A ou 102A) de l'eau de l'installation, ou de l'eau du puits, du fait de la disposition de ces chambres entre les zones d'étanchéité correspondantes, et qu'en outre le puits (voie 2C ou 102C) est isolé de l'installation (voie 2B ou 102B).

On observera que le fait de devoir passer par la position de fermeture entre les deux positions passantes, impose de faire déboucher au moins un orifice de la tubulure de l'obturateur 3 ou 103 dans la chambre 6 ou 106A à 106D, ce qui fait que le liquide qui y est contenu est mis à l'atmosphère, est recueilli dans la chambre et s'écoule par son orifice. Le liquide résiduel de la tubulure ne peut donc être un source de pollution de l'une des circuit branché sur la vanne.

Les vannes des figures 1 à 7, qui ont seulement deux voies, sont également utilisables entre une conduite réseau branchée sur la première voie 2A, 12A ou 102A, et une conduite utilisation branchée sur la deuxième voie 2B, 12B ou 102B et être combinées avec un clapet de non-retour disposé sur au moins l'une des première ou deuxième voies, se fermant vers le réseau ou s'ouvrant vers l'installation ; et de préférence un clapet sur chacune des première ou deuxième voies, pour avoir une double sécurité.

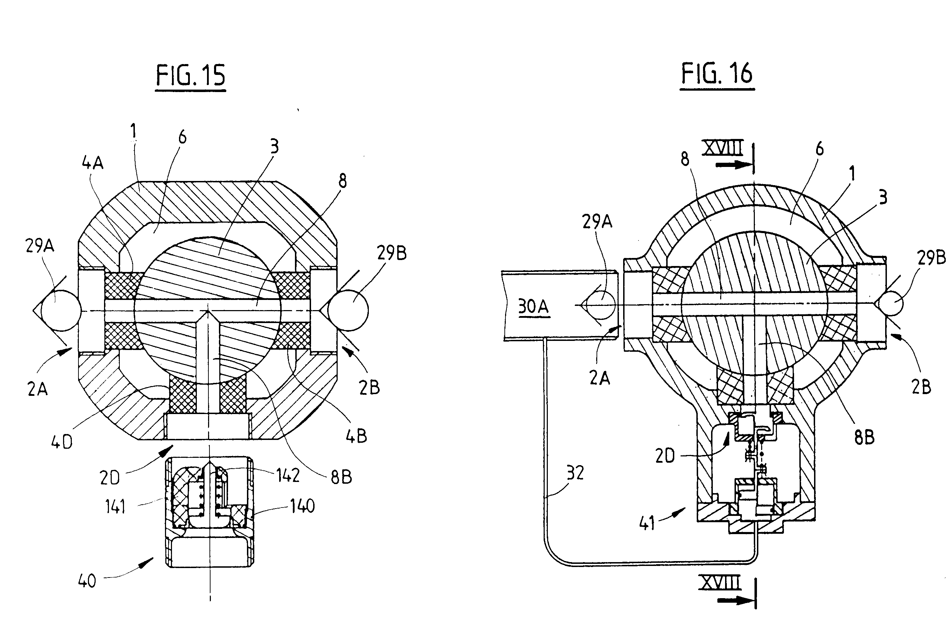

La vanne faisant partie de l'organe de manoeuvre montré sur la figure 15 est similaire à la vanne des figures 1 et 2, mais son boisseau comporte en outre une voie 2D de montage d'un clapet casse-vide disposée suivant un diamètre transversal à celui suivant lequel sont disposées les première et deuxième voies 2A et 2B, avec un manchon correspondant 4D, et la tubulure du tournant est en T, c'est-à-dire qu'elle comporte en outre de la portion diamètrale 8, un portion radiale 8B se raccordant transversalement au centre de celle-ci. En position de fermeture, l'orifice de cette portion radiale 8B est disposé entre la voie 2D et l'une des voies 2A ou 2B, les trois voies 2A, 2B et 2D sont donc obturées, l'étanchéité étant assurée par les contacts tournant-manchons respectifs. Par rotation d'un huitième de tour, dans le sens anti-horaire si l'on a choisi de mettre l'orifice de la portion 8B entre les voies 2A et 2D, ou dans le sens horaire si l'on a choisi les voies 2D et 2B, on met la vanne dans sa position passante, montrée sur la figure 15, où la voie de montage d'un casse-vide 2D est reliée aux voies 2A et 2B. On manoeuvre la vanne en agissant sur des moyens comportant, comme dans la vanne des figures 1 et 2, un volant de commande et des butées correspondant aux positions passante et de fermeture.

L'organe de commande pour fluide illustré est destiné à être disposé entre un réseau d'alimentation et une installation de consommation, une conduite réseau étant destinée à être branchée sur la voie 2A et une conduite installation sur la voie 2B. Il comporte en outre de la vanne un clapet de non-retour monté sur chacune des première et deuxième voies, respectivement 29A et 29B, se fermant vers le réseau ou s'ouvrant vers l'installation; et un clapet casse-vide simple 40, destiné à être monté dans la voie 2D. Ce clapet 40 correspond en fait à un clapet de non-retour se fermant vers l'air libre, il comporte un corps 140 dans lequel est monté par un porte-soupape 141 en étoile, une soupape 142 coopérant avec un siège du corps 140.

En cas de dépression dans la conduite amont, par rapport à la pression atmosphérique, et s'il n'y a pas de clapet 29A, ou s'il y en a un qui est défectueux, La pression dans la tubulure devient inférieure à la pression atmosphérique, le casse-vide s'ouvre et la tubulure est mise à la pression atmosphérique.

Dans la variante montrée sur a figure 16 à 18, le clapet casse-vide 41 qui est monté dans la voie 2D est destiné à être relie par une conduite 32 à la conduite réseau 30A en amont du clapet de non-retour 29A, et comporte des moyens pour s'ouvrir lorsque, en position passante, la pression dans la tubulure du tournant est supérieure à la pression dans la conduite réseau.

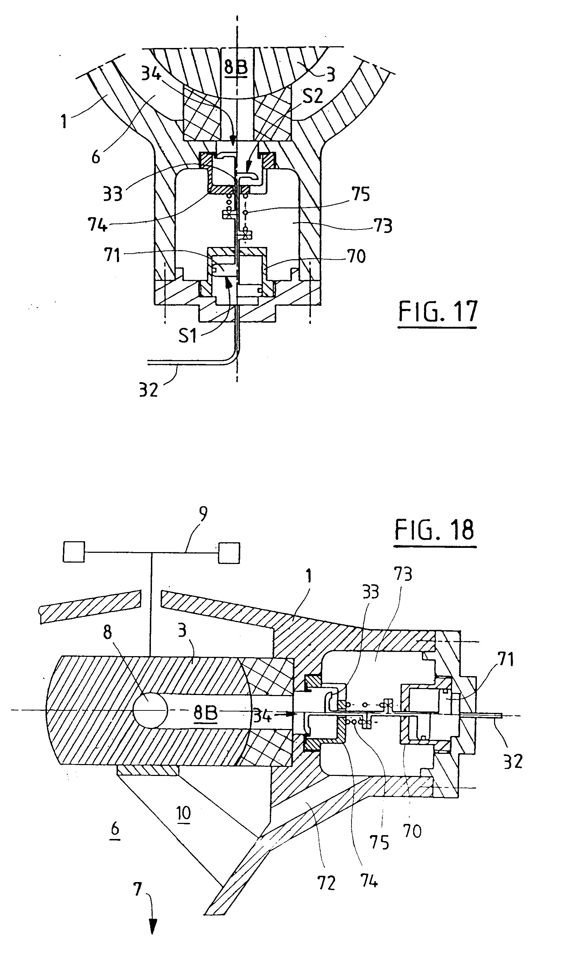

Les figures 17 et 18 montrent plus en détail le casse-vide 41. Il comporte une soupape 33 obturant ou laissant ouvert un orifice de mise à l'air libre 34 dans lequel débouche la tubulure 8, 8B de l'obturateur en position passante, et un cylindré 70 destiné à être relié à la conduite réseau 30A par la conduite 32, dans lequel est diposé un piston 71 lié à la soupape 33 et ayant une surface S1 similaire à la surface S2 de la soupape 33, le piston 71 adoptant donc lorsque la pression dans la tubulure est supérieure à la pression dans la conduite réseau, une position où la soupape laisse ouvert l'orifice de mise à l'air libre 34, montrée sur la demi-coupe de droite. La mise à l'air libre se fait par un conduit 72 (voir figure 18) reliant la chambre 6 et une chambre 73 sur laquelle s'ouvre l'orifice 34 à travers le porte-soupape 74.

Si le fluide tend à passer de l'installation vers le réseau, et qu'il n'y a pas de clapet 29B, celui-ci n'étant pas indispensable, ou s'il y en a un qui ne fonctionne pas, le clapet 29A se ferme, la pression dans la tubulure 8, 8B devient supérieure à la pression dans la conduite 30A, et le clapet 41 s'ouvre, mettant la tubulure à l'atmosphère.

Le casse-vide 41 comporte en outre un ressort 75 sollicitant le piston 71 vers une position où la soupape 33 laisse ouvert l'orifice 34, de sorte que le casse-vide s'ouvre alors que la pression dans la conduite réseau 30A est encore légèrement supérieure à celle de la tubulure, c'est-à-dire qu'il y a une certaine marge de sécurité, par exemple 0,2 bars.

En outre, il est préférable que le clapet 29A soit taré de façon à ne s'ouvrir qu'après que le piston 71 soit passé dans une position où la soupape 33 ferme l'orifice 34, par exemple à 0,4 bars de différence entre l'amont et l'aval du clapet 29A.

On évite ainsi, lorsque naît une circulation de fluide du réseau vers l'installation, qu'il y ait des fuites par le casse-vide.

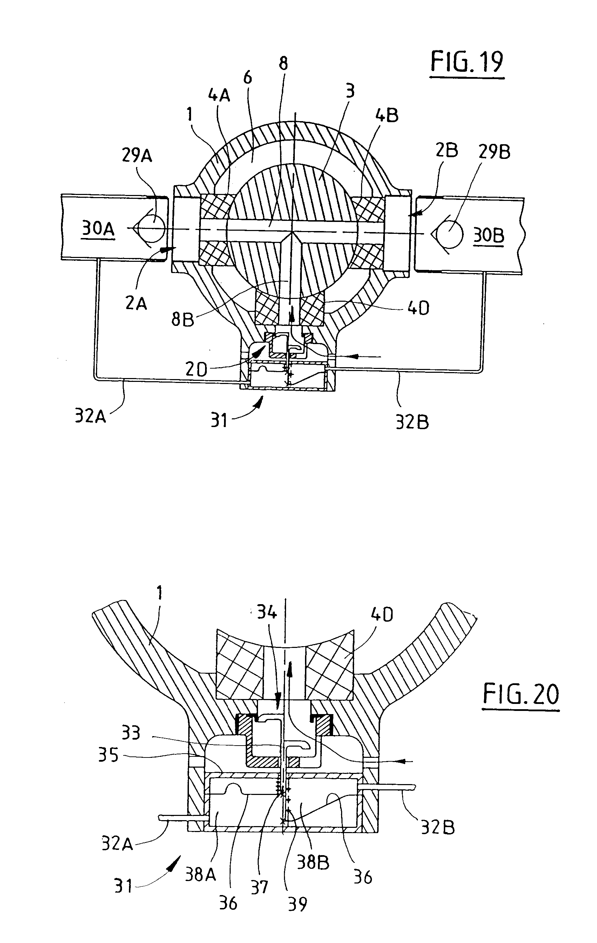

Dans la variante montrée sur la figure 19 et 20, le clapet casse-vide 31 monté dans la voie 2D est destiné à être relié par une conduite 32A à la conduite réseau 30A et par une conduite 32B à la conduite installation 30B, respectivement en amont ou en aval du clapet de non-retour 29A ou 29B, et comporte des moyens pour s'ouvrir lorsque la pression dans la conduite installation 30B est supérieure à la pression dans la conduite réseau 30A. La soupape 33 est ici reliée à un cylindre 35 divisé, par une membrane 36 disposée tranversalement à une tige 37 de la soupape et liée à cette tige, en deux chambres 38A et 38B respectivement destinées à être reliées à la conduite réseau et à la conduite installation par la conduite 32A et la conduite 32B. Lorsque la pression de la conduite installation 30B est supérieure à celle de la conduite réseau 30A, la membrane adopte donc une position où la soupape 33 laisse ouvert l'orifice de mise à l'air libre 34, ainsi que représenté sur la demi-coupe de droite.

Si le fluide tend à passer de l'installation vers la réseau, le ou les clapet(s) 29A ou 29B présent(s) ou en état de fonctionnement se ferme(nt), la pression dans la conduite 30B devient supérieure à la pression dans la conduite 30A et le clapet 31 s'ouvre, mettant la tubulure à l'atmosphère.

Le ressort 39 de la soupape 31 est comparable à celui de la soupape 41, et le clapet 29A est de préférence taré de façon similaire à celui de l'organe des figures 16 à 18 par rapport à ce ressort.

On notera, dans le cas où il y a un clapet 29B, que le clapet 41 offre par rapport au clapet 31 l'avantage de ne réagir aux surpressions dans la conduite installation qu'en cas de nécessité, c'est-à-dire seulement si le clapet 29B est défectueux.

En variante on peut utiliser une membrane pour le casse-vide 41 à la place du piston 71, et un piston pour le casse-vide 31 à la place de la membrane 36.

La vanne faisant partie de l'organe de manoeuvre illustré sur la figure 21 comporte un boisseau avec une première, une deuxième et une troisième voies, 2A, 2B et 2C destinées à être raccordées à une conduite de fluide, ainsi qu'une voie de montage d'un clapet casse-vide 2D, avec un manchon correspondant 4D. La première et la deuxième voie 2A et 2B sont diamètralement opposées, suivant un premier diamètre, et il en est de même des troisième voie et voie de montage d'un casse-vide 2C et 2D, suivant un diamètre transversal audit premier diamètre. La tubulure du tournant est en T, avec une partie diamètrale 8 au centre de laquelle se raccorde transversalement une partie radiale 8B.

En position de fermeture, l'orifice de la partie radiale 8B est disposé entre la voie de montage d'un casse-vide 2D et la deuxième voie 2B, un des orifices de la partie diamètrale 8 entre les voies 2A et 2D, et l'autre orifice entre les voies 2B et 2C. Les 4 voies 2A et 2D sont obturées, l'étanchéité étant assurée par le contact entre ce tournant et les manchons respectifs. On observera que dans cette position, il y a au moins une portion de la chambre 6 située entre n'importe quelle paire de zones d'étanchéité prise parmi celles qui assurent l'obturation des voies de la vanne.

De part et d'autre de cette position de fermeture, le tournant 3 admet une position passante où, par rotation dans le sens horaire, la voie 2B est mise en communication avec les voies 2A et 2D tandis qu'est obturée la voie 2C (position représentée sur la figure 21), ou bien, par rotation dans le sens anti-horaire, cette voie 2B est mise en communication avec les voies 2C et 2D tandis qu'est obturée la voie 2A.

On réalise les rotations d'un huitième de tour nécessaire pour passer de la position de fermeture à l'une des positions passante, en agissant sur des moyens de commande et d'indexation identiques à ceux montrés sur la figure 12.

La partie de la description qui précède à propos de l'utilisation de la vanne des figures 11 à 14 s'applique aussi à cette vanne, de même que la partie relative à la combinaison des vannes des figures 15, 16 à 18 et 19, 20 avec un clapet de non-retour sur les voies 2A et 2B, et un casse-vide sur la voie 2D, pour la position passante montrée sur la figure 21.

La coupe partielle de la figure 22 montre des modifications à la vanne des figures 3 et 4 pour qu'un clapet casse-vide puisse y être montré.

Le cylindre 11 comporte en outre une voie 12D de montage d''un clapet casse-vide, centré sur un axe contenu dans un même plan transversal au cylindre que l'axe de la première voie 12A ; et la tubulure du piston comporte en outre une gorge annulaire 24 ménagée dans la surface latérale de ce dernier, centrée sur un plan transversal au piston contenant l'axe de la portion radiale 18B de la tubulure. Ainsi, dans la position passante représentée sur la figure 22, la voie de montage d'un casse-vide est reliée aux voies 12A et 12B. Une telle vanne s'utilise d'une façon similaire à celle de la vanne décrite précédemment à propos des figures 15, 16 à 18 et 19, 20, les voies 12A, 12B et 12D correspondant respectivement aux voies 2A, 2B et 2D.

La coupe partielle de la figure 23 concerne aussi bien la vanne des figures 5 à 7 que celle des figures 8 à 10, elle montre des modifications pour qu'un clapet casse-vide puisse y être monté.

En ce qui concerne la vanne des figures 5 à 7, le cylindre 101 comporte en outre une voie de montage d'un clapet casse-vide 102D, axialement décalée par rapport aux première et deuxième voies 102A et 102B, pour laquelle est prévu un joint 104D similaire aux joints 104A et 104B ; et le piston comporte une tubulure ayant une portion axiale 108A raccordée à la portion diamètrale 108 et à laquelle se raccorde une portion radiale 108B, l'orifice de cette dernière se plaçant en regard de la voie 102D dans la position passante, montrée sur la figure 23, dans laquelle cette voie de montage d'un casse-vide est reliée aux voies 102A et 102B. Une telle vanne s'utilise de façon similaire à celle de la figure 22.

S'agissant de la vanne des figures 8 à 10, le cylindre 101 comporte simplement en outre la voie 102D, à l'emplacement de la pastille 109A, et celle-ci est remplacée par le joint 104D. Ainsi, dans la position passante représentée, qui correspond à celle de la figure 10, la voie de montage d'un casse-vide est mise en communication avec les première et deuxième voies 102A et 102B. Cette vanne s'utilise de façon similaire à celle de la figure 21, mais le casse-vide n'est pas relié à la tubulure dans la position passante correspondant à la figure 8.

La figure 24 montre une autre modification de la vanne des figures 8 à 10 permettant de relier la tubulure à un casse-vide dans cette position, modification qui peut être réalisée en combinaison ou non avec celle montrée sur la figure 23, en fonction des besoins de l'utilisateur : on a simplement pratiqué une voie 102D′ à l'emplacement de la pastille 109B, et remplacé celle-ci par un joint 104D′.

L'organe de protection contre les retours de fluide montré sur la figure 25 comporte une vanne correspondant à celles des figures 1 et 2, mais sans volant de commande, illustrée en traits interrompus. Elle est destinée à être disposée entre un réseau d'alimentation en fluide et une installation de consommation, une conduite réseau 30A étant destinée à être branchée sur la première voie 2A et une conduite installation 30B sur la deuxième voie 2B; L'organe de protection comporte aussi un système d'asservissement 43 de l'obturateur 3 de cette vanne, destiné à être relié respectivement par des conduites 42A et 42B, aux conduites 30A et 30B, comportant des moyens pour faire passer l'obturateur en position de fermeture lorsque la pression dans la conduite installation 30B est supérieure à la pression dans la conduite réseau 30A. L'appareil disconnecte donc dans ces circonstances le réseau de l'installation.

Le système d'asservissement 43 comporte un cylindre 44 dans lequel est mobile un piston 45 ayant à chacune de ses extrêmités une surface 46A ou 46 B mobile dans une chambre 47A ou 47B mise en communication respectivement avec la conduite réseau 30A et avec la conduite installation 30B, ce piston étant lié au tournant par un système à pignon 48 coaxial au tournant et à crémaillère 49 solidaire du piston. Les surfaces 46A et 46B sont égales, de telle sorte que lorsque la pression dans la conduite installation est supérieure à la pression dans la conduite réseau, le piston adopte une position où le tournant est en position de fermeture, ainsi que le montre la figure 25. On notera que la position représentée est la position de fermeture extrême, où le tournant a fait un quart de tour, mais qu'il suffit d'une rotation beaucoup moins importante pour que l'on soit en position de fermeture.

Le système d'asservissement comporte de préférence un ressort 50 sollicitant le piston 45 dans une position où l'obturateur de la vanne est en position de fermeture, c'est-à-dire vers la gauche de la figure 25, de sorte que l'obturateur passe en position de fermeture lorsque la différence entre la pression de la conduite réseau et celle de la conduite installation devient inférieure à un seuil bas prédéterminé, qui correspond à une marge de sécurité similaire à celle décrite précédemment à propos du ressort des casse-vides 31 et 41.

En outre, pour faire apparaître de façon marquée une différence de pression quand il tend à y avoir un retour de fluide, au moins un clapet de non-retour est prévu sur la première ou sur la seconde voie, se fermant vers le réseau ou s'ouvrant vers l'installation, ici un clapet sur chacune des première et deuxième voies, respectivement 51A et 51B, pour augmenter la sécurité.

Le lamage 80 de la chambre 47B permet d'appliquer la pression sur la surface 46B, même lorsqu'elle est en butée sur la paroi dans laquelle débouche la conduite 42B.

On notera, en ce qui concerne l'étanchéité entre le piston 45 et les chambres 47A et 47B, qu'au lieu d'utiliser les joints cylindriques 52A et 52B, il peut être avantageux de prévoir une membrane, pour limiter les frottements.

Il est également possible d'asservir de façon similaire la vanne de figures 3 et 4, par exemple en prévoyant des surfaces telles que les surfaces 46A et 46B aux extrémités du piston 13 des chambres correspondant aux chambres 47A et 47B étant prévues dans le cylindre 11.

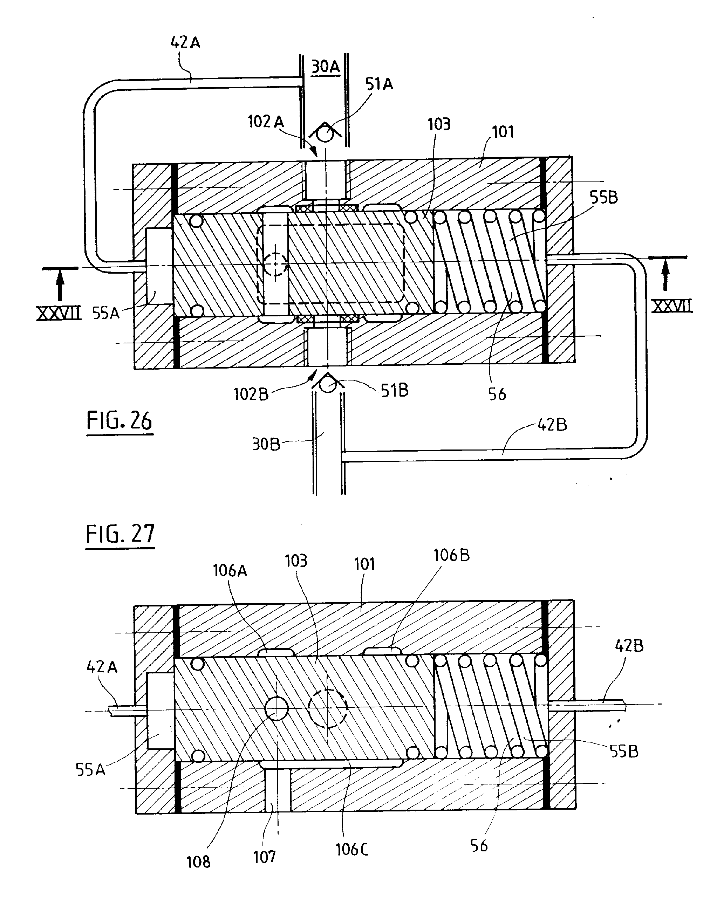

Il en est de même pour la vanne des figures 5 à 7, ainsi qu'illustré sur les figures 26 et 27, où les chambres 55A et 55B correspondant aux chambres 47A et 47B, tandis que le ressort 56 correspond au ressort 50.

Bien entendu, l'invention ne se limite pas aux modes de réalisation décrits et représentés sur les figures, mais englobe au contraire toutes les variantes que l'homme de métier pourra déterminer, dans le cadre des revendications.

## Revendications

1. Organe de commande pour fluide, destiné à être disposé entre un réseau d'alimentation en fluide et une installation de consommation, comportant : un corps (1) muni d'au moins une première voie (2A, 12A, 102A) destinée à être raccordée à une conduite réseau (30A), et une deuxième voie (2B, 12B, 102B) destinée à être raccordée à une conduite installation (30B); un obturateur mobile (3) dans ce corps (1), admettant une position de fermeture où il obture lesdites voies, et une position passante où ces voies sont mises en communication par une tubulure que présente cet obturateur (3); et des moyens d'étanchéité pour produire par contact des zones assurant respectivement, en position de fermeture, l'étanchéité de l'obturation de chacune des première et deuxième voies; caractérisé en ce qu'il comporte en outre : une chambre (6, 16, 106A, 106B, 106C) munie d'un orifice (7, 17, 107) débouchant à l'air libre, pour la mettre à l'atmosphère et pour évacuer des fuites éventuelles auxdites zones d'étanchéité, ladite chambre étant située entre lesdites zones d'étanchéité quand l'obturateur est en position de fermeture; ainsi qu'un clapet de non-retour (29A, 29B) disposé sur chacune desdites première et deuxième voies, se fermant vers le réseau ou s'ouvrant vers l'installation.

2. Organe selon la revendication 1, caractérisé en ce que ledit corps comporte également une voie de montage d'un clapet casse-vide (2D, 12D, 102D), et en ce que l'obturateur (3, 13, 103) comporte une tubulure adaptée à relier, dans ladite position passante, cette voie de montage d'un casse-vide avec lesdites première et deuxième voies.

3. Organe selon l'une quelconque des revendications 1 ou 2, caractérisé en ce que ledit corps comporte en outre une troisième voie (2C, 12C, 102C) destinée à être raccordée à une conduite de fluide; en ce que l'obturateur comporte une tubulure adaptée à ce que cette troisième voie soit également obturée dans la position de fermeture, et à ce que l'obturateur admette de part et d'autre de la position de fermeture une position passante où ladite deuxième voie (2B, 12B, 102B) est respectivement mise en communication avec la première ou la troisième voie tandis qu'est respectivement obturée la troisième ou la première voie; et en ce que ladite chambre (6, 16, 106A, 106B, 106C) est également diposée, en position de fermeture, entre au moins les zones assurant respectivement l'étanchéité de la première et de la troisième voies ou celles assurant respectivement l'étanchéité de la deuxième voie et de la troisième voie.

4. Organe selon l'une quelconque des revendications 1 à 3, caractérisé en ce que l'obturateur (3, 13, 103) est monté dans le corps (1, 11, 101) de façon à garder le contact, lorsqu'on le déplace, avec le pourtour des orifices par lequels débouchent respectivement dans le corps au moins les première et deuxième voies.

5. Organe selon la revendication 1, caractérisé en ce que ledit corps est un boisseau (1), en ce que ledit obturateur est un tournant (3) monté dans le boisseau par des manchons (4A, 4B) coaxiaux aux voies que comporte celui-ci, et en ce que ladite chambre (6) est un espace régnant entre le boisseau et le tournant du fait que lesdits manchons présentent une saillie par rapport à la paroi intérieure du boisseau.

6. Organe selon la revendication 5, caractérisé en ce que lesdits manchons (4A, 4B) ont une épaisseur au moins égale au diamètre de la tubulure du tournant.

7. Organe selon l'une quelconque des revendications 5 ou 6, caractérisé en ce que ledit boisseau(1) comporte comme voies destinées à être raccordées à une conduite de fluide, seulement lesdites première et deuxième voies (2A, 2B), en ce que ces voies sont diamétralement opposées, et en ce que ledit tournant (3) comporte une tubulure diamétrale (8).

8. Organe selon la revendication 7, caractérisé en ce que ledit boisseau comporte en outre une voie de montage d'un clapet casse-vide (2D) disposée suivant un diamètre transversal à celui suivant lequel sont disposées lesdites première et deuxième voies ( 2A, 2B), et en ce que la tubulure du tournant est en T, c'est à dire qu'elle comporte en outre un portion radiale ( 8B) se raccordant transversalement au centre de ladite tubulure diamétrale (8), l'orifice de cette portion radiale étant disposé en position de fermeture entre la voie de montage d'un casse-vide (2D) et l'une desdites première et deuxième voies (2A, 2B).

9. Organe selon l'une quelconque des revendications 5 ou 6, caractérisé en ce que ledit boisseau comporte comme voies destinées à être raccordées à une conduite de fluide, lesdites première et deuxième voies (2A, 2B) ainsi qu'une troisième voie (2C), la première et la troisième voies (2A, 2C) étant diamètralement opposées, suivant un premier diamètre, et la deuxième voie (2B) étant disposée suivant un diamètre transversal audit premier diamètre; et en ce que la tubulure du tournant (3) est en L, chacun des orifices de cette tubulure étant disposé en position de fermeture entre la deuxième voie (2B) et l'une des premières ou troisième voies (2A, 2C).

10. Organe selon l'une quelconque des revendications 5 ou 6, caractérisé en ce que ledit boisseau (1) comporte comme voies destinées à être raccordées à une conduite de fluide lesdites première et deuxième voies (2A, 2B) ainsi qu'un troisième voie (2C); en ce qu'il comporte une voie de montage d'un clapet casse-vide (2D), la première et deuxième voies étant diamètralement opposées, suivant un premier diamètre, la troisième voie étant diamétralemnt opposée à la voie de montage d'un casse-vide , suivant un diamètre transversal audit premier diamètre; en ce que la tubulure du tournant (3) est en T, avec un partie diamétrale (8) au centre de laquelle se raccorde transversalement une partie radiale (8B), l'orifice de la partie radiale étant disposé en position de fermeture entre la voie de montage d'un casse-vide (2D) et la deuxième voie (2B), un premier orifice de la partie diamétrale entre la première voie et la voie de montage d'un casse-vide (2A, 2D), et le deuxième orifice de la partie diamétrale entre la deuxième et la troisième voies (2B, 2C).

11. Organe selon la revendication 1, caractérisé en ce que ledit corps est un cylindre (11), en ce que ledit obturateur est un piston (13) coulissant dans ledit cylindre, et en ce que ladite chambre (16) est un évidement annulaire présenté par la paroi d'alésage du cylindre entre lesdites première et deuxième voies (12A, 12B), celles-ci étant ménagées dans la paroi latérale dudit cylindre, axialement décalées l'une par rapport à l'autre.

12. Organe selon la revendication 11, caractérisé en ce que ledit piston comporte un joint torique (14A, 14D) de part et d'autre de chacun des orifices de sa tubulure.

13. Organe selon l'une quelconque des revendications 11 ou 12, caractérisé en ce que ledit cylindre comporte comme voies destinées à être reliées à une conduite de fluide, seulement lesdites première et deuxième voies (12A, 12B); et en ce que ledit piston comporte une tubulure ayant une portion axiale (18A) à laquelle se raccordent deux portions radiales (18B, 18C).

14. Organe selon la revendication 13, caractérisé en ce que ledit cylindre comporte en outre une voie de montage d'un clapet casse-vide (12D), centrée sur un axe contenu dans un même plan transversal au cylindre que l'axe de la première voie (12A); et en ce que la tubulure du piston comporte une gorge annulaire (25) ménagée dans la surface latérale de ce dernier, centrée sur un plan transversal au piston contenant l'axe de l'une des portions radiales (18B), celle-ci se raccordant à la première voie (12A) en position passante.

15. Organe selon la revendication 1, caractérisé en ce que ledit corps est un cylindre (101) dans la paroi latérale duquel les première et deuxième voies (102A, 102B) destinées à être raccordées à une conduite de fluide sont ménagées diamètralement opposées, en ce que ledit obturateur est un piston (103) coulissant dans ledit cylindre, et en ce que ladite chambre comporte un évidement annulaire (106A, 106B) ménagé dans la paroi d'alésage du cylindre, de part et d'autre desdites première et deuxième voies, ainsi qu'un évidement longitudinal inférieur (106C) dans lequel débouchent les évidements annulaires (106A, 106B) et l'orifice de mise à l'air libre (107).

16. Organe selon la revendication 15, caractérisé en ce que le cylindre (101) comporte pour chacune des première et deuxième voies un joint (104A, 104B) par lequel elles débouchent respectivement, et contre lequel glisse le piston (103).

17. Organe selon l'une quelconque des revendications 15 ou 16, caractérisé en ce que ledit cylindre (101) comporte comme voies destinées à être reliées à une conduite de fluide, seulement lesdites première et deuxième voies (102A, 102B) ; et en ce que ledit piston (103) comporte une tubulure diamètrale (108).

18. Organe selon la revendication 17, caractérisé en ce que ledit cylindre (101) comporte en outre une voie (102D) de montage d'un clapet casse-vide, axialement décalée par rapport aux première et deuxième voies (102A, 102B) ; et en ce que le piston comporte une tubulure ayant une portion diamètrale (108) à laquelle se raccorde une portion axiale (108A) à laquelle se raccorde une portion radiale (108B), l'orifice de cette dernière se plaçant en regard de la voie de montage d'un casse-vide (102D) tandis que les orifices de la portion diamètrale se placent en regard des première et deuxième voies (102A, 102B) , en position passante.

19. Organe selon l'une quelconque des revendications 15 ou 16, caractérisé en ce que ledit cylindre comporte comme voies destinées à être reliées à une conduite de fluide, lesdites première et deuxième voies (102A, 102B) ainsi qu'une troisième voie (102C) axialement décalée par rapport à celles-ci, située à leur opposé par rapport à un premier (106B) des évidements annulaires de la paroi d'alésage du cylindre encadrant la première et deuxième voie, un troisième (106D) évidement annulaire étant ménagé de l'autre côté de la troisième voie ; et en ce que la tubulure du piston comporte une portion diamètrale (108) à laquelle se raccorde une portion axiale (108A), à laquelle se raccorde une portion radiale (108B), les orifices de la portion diamètrale se plaçant en regard dudit premier évidement annulaire (106B) tandis que l'orifice de la portion radiale se place en regard de l'évidement annulaire (106A) situé à l'opposé du premier évidement annulaire par rapport aux première et deuxième voies, dans une position de fermeture de la vanne de part et d'autre de laquelle elle admet une position passante où la deuxième voie est mise en communication avec respectivement la première et la troisième voie tandis qu'est respectivement obturée la troisième et la première voie.

20. Organe selon la revendication 19, caractérisé en ce que ledit cylindre (101) comporte une voie de montage d'un clapet casse-vide (102D) située à l'opposé de la troisième voie par rapport aux première et deuxième voie, en regard de laquelle se place l'orifice de la portion radiale de la tubulure du piston dans la position passante où sont mises en communication les première et deuxième voies.

21. Organe selon l'une quelconque des revendications 19 ou 20, caractérisé en ce que ledit cylindre comporte une voie de montage d'un clapet casse-vide (102D′) diamètralement opposé par rapport à ladite troisième voie.

22. Organe de commande pour fluide, selon l'une quelconque des revendications 2, 8, 10, 14, 18, 20 ou 21, caractérisé en ce q'il comporte un clapet casse-vide (31, 40, 41), monté dans ladite voie de montage d'un casse-vide (2D, 12D, 102D).

23. Organe selon la revendication 22, caractérisé en ce que ledit clapet casse-vide (40) comporte des moyens pour s'ouvrir lorsque, en position passante, la pression dans la tubulure est inférieure à la pression atmosphérique.

24. Organe selon la revendication 22, caractérisé en ce qu'un clapet de non-retour (29A) est monté sur ladite première voie, en ce que ledit clapet casse-vide (41) est destiné à être relié à la conduite réseau (30A) en amont du clapet de non-retour (29A) monté sur la première voie, et en ce que le clapet casse-vide (41) comporte des moyens pour s'ouvrir lorsque, en position passante, la pression dans la tubulure est supérieure à la pression dans la conduite réseau.

25. Organe selon la revendication 24, caractérisé en ce que ledit clapet casse-vide comporte une soupape (33) obturant ou laissant ouvert un orifice de mise à l'air libre (34) dans lequel débouche la tubulure de l'obturateur en position passante, et un cylindre (70) destiné à être à la conduite réseau, dans lequel est disposé un piston (71) ou une membrane lié à ladite soupape (33) et ayant une surface (51) similaire à la surface (52) de la soupape, le piston ou la membrane adoptant lorsque la pression dans la tubulure est supérieure à celle de la conduite réseau, une position où la soupape laisse ouvert l'orifice de mise à l'air libre.

26. Organe selon la revendication 25, caractérisé en ce que ledit clapet casse-vide (41) comporte en outre un ressort (75) sollicitant ladite membrane ou ledit piston (71) vers une position où le soupape (33) laisse ouvert l'orifice (34) de mise à l'air libre.

27. Organe selon la revendication 26, caractérisé en ce que le clapet de non-retour (29A) disposé sur la première voie (2A, 12A, 102A) est taré de façon à ne s'ouvrir qu'après que ladite membrane ou ledit piston (71), soit passé dans une position où la soupape ferme l'orifice de mise à l'air libre.

28. Organe selon la revendication 22, caractérisé en ce que ledit clapet casse-vide (31) est destiné à être relié auxdites conduites réseau et installation (30A, 30B) respectivement en amont ou en aval du clapet de non-retour monté sur la première ou sur la seconde voie, et en ce que ce clapet comporte des moyens pour s'ouvrir lorsque la pression dans la conduite installation (30B) est supérieure à la pression dans la conduite réseau (30A).

29. Organe selon la revendication 23, caractérisé en ce que ledit clapet casse-vide comporte une soupape (33) obturant ou laissant ouvert un orifice de mise à l'air libre (34), et un cylindre (35) divisé, par une menbrane (36) ou un piston disposé transversalement à une tige (37) de la soupape et liée à cette tige, en deux chambres (38A, 38B) respectivement destinées à être reliées à la conduite réseau (30A) et à la conduite installation (30B), la membrane (36) ou le piston adoptant lorsque la pression de la conduite installation est supérieure à celle de la conduite réseau, une position où la soupape (33) laisse ouvert l'orifice de mise à l'air libre (34).

30. Organe selon la revendication 29, caractérisé en ce que ledit clapet casse-vide (31) comporte en outre un ressort (39) sollicitant ladite membrane (36) ou ledit piston vers une position où la soupape (33) laisse ouvert l'orifice (34) de mise à l'air libre.

31. Organe selon la revendication 30, dans lequel un clapet de non-retour (29A) est monté sur la première voie (2A, 12A, 102A), caractérisé en ce que ce clapet de non-retour (29A) est taré de façon à ne s'ouvrir qu'après que ladite membrane (36) ou ledit piston soit passée dans une position où la soupape ferme l'orifice de mise à l'air libre.

32. Organe selon l'une quelconque des revendications 1 à 31, caractérisé en ce que ledit orifice (7, 17, 107) dont est munie la chambre, débouche directement à l'air libre et est ouvert en permanence.

33. Organe selon l'une quelconque des revendications 1 à 32, caractérisé en ce que ledit orifice (7, 17, 107), dont est munie la chambre, est situé en partie basse de l'organe.

34. Organe selon l'une quelconque des revendications 1 à 33, caractérisé en ce qu'il comporte des moyens (9, 19) pour manoeuvrer manuellement l'obturateur.

35. Appareil de protection contre les retours de fluide caractérisé en ce qu'il comporte : un organe selon l'une quelconque des revendications 1, 7, 8, 13, 14, 17 ou 18, éventuellement combinée à la revendication 32 ou à la revendication 33; ainsi qu'un système d'asservissement (43) de l'obturateur (3, 13), destiné à être relié respectivement à la conduite réseau et à la conduite installation respectivement en amont ou en aval du clapet de non-retour (29A, 29B) monté sur la première ou la seconde voie, comportant des moyens pour faire passer l'obturateur en position de fermeture lorsque la pression de la conduite installation est supérieure à la pression dans la conduite réseau.

36. Appareil selon la revendication 35, caractérisé en ce que ledit système d'asservissement (43) comporte un cylindre (44) dans lequel est mobile un piston (45) ayant à chacune de ses extrémités une surface mobile (46A, 46B) dans une chambre (47A, 47B) mise en communication respectivement avec la conduite réseau et avec la conduite installation, ce piston étant lié à l'obturateur (3, 13, 103), et adoptant lorsque la pression dans la conduite installation (30B) est supérieure à la pression dans la conduite réseau (30A), une position où l'obturateur est en position de fermeture.

37. Appareil selon la revendication 36, caractérisé en ce que ledit système d'asservissement (43) comporte en outre un ressort (50) sollicitant ledit piston (45) dans une position où l'obturateur est en position de fermeture, de sorte que l'obturateur passe en position de fermeture lorsque la différence entre la pression de la conduite réseau et celle de la conduite installation devient inférieure à un seuil bas prédéterminé.

## Patentansprüche

1. Fluid-Steuerorgan zur Anordnung zwischen einem Fluid-Versorgungsnetz und einer Verbraucherstelle, mit einem Ventilkörper (1), der wenigstens einen ersten Anschluß (2A, 12A, 102A) zur Verbindung mit einer Netzleitung (30A) sowie einen zweiten Anschluß (2B, 12B, 102B) zur Verbindung mit einer Verbraucherleitung (30B) aufweist, ferner mit einem im Ventilkörper (1) beweglichen Schieber (3), der eine Schließstellung, in der er die Anschlüsse absperrt, und eine Durchlaßstellung, in der diese Anschlüsse miteinander über einen Durchgang im Schieber (3) in Verbindung stehen, aufweist, und mit Dichtungsmitteln, um über Kontakt Zonen zu erzeugen, die in der Schließstellung jeweils die Dichtheit der Absperrung des ersten und des zweiten Anschlusses gewährleisten, **dadurch gekennzeichnet**, daß das Steuerorgan ferner eine Kammer (6, 16, 106A, 106B, 106C) aufweist, die mit einer in die freie Luft mündenden Entlüftungsöffnung (7, 17, 107) versehen ist, um die Kammer an die Umgebungsluft anzuschließen und eventuelle Leckagen an diesen Dichtungszonen zu evakuieren, wobei die Kammer zwischen diesen Dichtungszonen liegt, wenn der Schieber in Schließstellung ist, und daß ein Rückschlagventil (29A, 29B) am ersten und am zweiten Anschluß angebracht ist, das zum Netz hin sperrt oder zum Verbraucher hin öffnet.

2. Steuerorgan nach Anspruch 1, dadurch gekennzeichnet, daß der Ventilkörper eine Montagebohrung (2D, 12D, 102D) für ein Rückschlagventil aufweist und der Schieber (3, 13, 103) mit einem Durchgang versehen ist, der in der Durchlaßstellung die Montagebohrung für das Rückschlagventil mit dem ersten und dem zweiten Anschluß verbindet.

3. Steuerorgan nach Anspruch 1 oder 2, dadurch gekennzeichnet, daß der Ventilkörper ferner einen dritten Anschluß (2C, 12C, 102C) für eine Fluidleitung aufweist, daß der Schieber mit einem Durchgang derart versehen ist, daß auch der dritte Anschluß in der Schließstellung gesperrt wird und der Schieber beidseits seiner Schließstellung eine Durchlaßstellung aufweist, in welcher der zweite Anschluß (2B, 12B, 102B) jeweils mit dem ersten bzw. dem dritten Anschluß verbunden ist, während jeweils der dritte bzw. der erste Anschluß gesperrt sind, und daß die Kammer (6, 16, 106A, 106B, 106C) in der Schließstellung mindestens zwischen den Bereichen, welche jeweils die Dichtigkeit des ersten bzw. des dritten Anschlusses gewährleisten, oder den Bereichen, welche jeweils die Dichtigkeit des zweiten bzw. des dritten Anschlusses gewährleisten, angeordnet ist.

4. Steuerorgan nach einem der Ansprüche 1 bis 3, dadurch gekennzeichnet, daß der Schieber (3, 13, 103) im Ventilkörper (1, 11, 101) derart angeordnet ist, daß er beim Verschieben mit dem Umfang der Öffnungen in Kontakt bleibt, über die jeweils zumindest der erste und der zweite Anschluß im Ventilkörper münden.

5. Steuerorgan nach Anspruch 1, dadurch gekennzeichnet, daß der Ventilkörper ein Rohrgehäuse (1) und der Schieber ein Drehschieber (3) ist, der im Rohrgehäuse mittels zu dessen Anschlüssen koaxialen Büchsen (4A, 4B) montiert ist, und daß die Kammer (6) aufgrund dessen, daß die Büchsen relativ zur Innenwand des Rohrgehäuses vorstehen, als Spalt zwischen dem Rohrgehäuse und dem Drehschieber ausgebildet ist.

6. Steuerorgan nach Anspruch 5, dadurch gekennzeichnet, daß die Büchsen (4A, 4B) eine Dicke aufweisen, die wenigstens gleich dem Durchmesser des Durchgangs des Drehschiebers ist.

7. Steuerorgan nach Anspruch 5 oder 6, dadurch gekennzeichnet, daß das Rohrgehäuse (1) als Fluidleitungs-Anschlüsse nur den ersten sowie den zweiten Anschluß (2A, 2B) aufweist, wobei diese Anschlüsse einander diametral gegenüberliegen, und daß der Drehschieber (3) mit einem diametral verlaufenden Durchgang (8) versehen ist.

8. Steuerorgan nach Anspruch 7, dadurch gekennzeichnet, daß das Rohrgehäuse noch eine Montagebohrung für ein Rückschlagventil (2D) aufweist, die längs eines Durchmessers angeordnet ist, der quer zu dem Durchmesser liegt, längs dessen der erste und der zweite Anschluß (2A, 2B) angeordnet sind, und daß der Durchgang im Drehschieber T-förmig ausgebildet ist, d. h. daß er einen radialen Abschnitt (8B) aufweist, der sich in der Mitte des diametral verlaufenden Durchgangs (8) quer anschließt, wobei die Mündungsöffnung dieses radialen Abschnitts in Schließstellung zwischen der Montagebohrung für das Rückschlagventil (2D) und dem ersten oder dem zweiten Anschluß (2A, 2B) liegt.

9. Steuerorgan nach Anspruch 5 oder 6, dadurch gekennzeichnet, daß das Rohrgehäuse als Fluidleitungs-Anschlüsse den ersten und den zweiten Anschluß (2A, 2B) sowie einen dritten Anschluß (2C) aufweist, wobei der erste und der dritte Anschluß (2A, 2C) einander diametral längs eines ersten Durchmessers gegenüberliegen und der zweite Anschluß (2B) auf einem zu diesem ersten Durchmesser quer verlaufenden Durchmesser liegt, und daß der Durchgang des Drehschiebers (3) L-förmig ausgebildet ist, wobei jede seiner Mündungsöffnungen in Schließstellung zwischen dem zweiten Anschluß (2B) und dem ersten oder dritten Anschluß (2A, 2C) liegt.

10. Steuerorgan nach Anspruch 5 oder 6, dadurch gekennzeichnet, daß das Rohrgehäuse (1) als Fluidleitungs-Anschlüsse den ersten und zweiten Anschluß (2A, 2B) sowie einen dritten Anschluß (2C) aufweist, daß eine Montagebohrung für ein Rückschlagventil (2D) vorgesehen ist, der erste und der zweite Anschluß längs eines ersten Durchmessers einander diametral gegenüberliegen, der dritte Anschluß längs eines zum ersten Durchmesser quer verlaufenden Durchmessers der Montagebohrung für ein Rückschlagventil diametral gegenüberliegt, und daß der Durchgang des Drehschiebers (3) T-förmig einen diametral verlaufenden Abschnitt (8), in dessen Mitte sich quer ein radialer Abschnitt (8B) anschließt, aufweist, wobei in Schließstellung die Mündungsöffnung des radialen Abschnitts zwischen der Montagebohrung für ein Rückschlagventil (2D) und dem zweiten Anschluß (2B), die eine Mündungsöffnung des diametral verlaufenden Abschnitts zwischen dem ersten Anschluß (2A) und der Montagebohrung für ein Rückschlagventil (2D) und seine andere Mündungsöffnung zwischen dem zweiten und dem dritten Anschluß (2B, 2C) liegt.

11. Steuerorgan nach Anspruch 1, dadurch gekennzeichnet, daß der Ventilkörper als Zylinderteil (11), der Schieber als in diesem gleitender Kolben (13) und die Kammer (16) als eine ringförmige Ausnehmung ausgebildet ist, die in der Bohrungswand des Zylinderteils zwischen dem ersten und dem zweiten Anschluß (12A, 12B) angebracht ist, wobei diese Anschlüsse ihrerseits in der Seitenwand des Zylinderteils, axial zueinander versetzt, angebracht sind.

12. Steuerorgan nach Anspruch 11, dadurch gekennzeichnet, daß der Kolben beidseits jeder Mündungsöffnung seines Durchgangs einen O-Ring (14A, 14D) trägt.

13. Steuerorgan nach Anspruch 11 oder 12, dadurch gekennzeichnet, daß das Zylinderteil als Fluidleitungs-Anschlüsse nur den ersten und zweiten Anschluß (12A, 12B) enthält und der Kolben einen Durchgang mit einem axialen Abschnitt (18A) aufweist, mit dem zwei radiale Abschnitte (18B, 18C) verbunden sind.

14. Steuerorgan nach Anspruch 13, dadurch gekennzeichnet, daß das Zylinderteil noch eine Montagebohrung für ein Rückschlagventil (12D) aufweist, die um eine Achse angeordnet ist, welche in derselben Querebene des Zylinderteils wie die Achse des ersten Anschlusses (12A) liegt, und daß der Durchgang im Kolben eine in der Kolben-Seitenfläche ausgebildete, um eine Querebene des Kolbens zentrierte Ringnut (25) umfaßt, welche die Achse desjenigen der radialen Abschnitte (18B) enthält, der in der Durchlaßstellung mit dem ersten Anschluß (12A) verbunden ist.

15. Steuerorgan nach Anspruch 1, dadurch gekennzeichnet, daß der Ventilkörper ein Zylinderteil (101) ist, in dessen Seitenwand der erste und der zweite Fluidleitungs-Anschluß (102A, 102B) diametral einander gegenüberliegend ausgebildet sind, daß der Schieber ein im Zylinderteil gleitender Kolben (103) ist, und daß die Kammer zu beiden Seiten des ersten und des zweiten Anschlusses eine ringförmige, in der Bohrungswand des Zylinderteils ausgebildete Vertiefung (106A, 106B) und ferner eine untere Längsvertiefung (106C) umfaßt, in welche die ringförmigen Vertiefungen (106A, 106B) und die Entlüftungsöffnung (107) einmünden.

16. Steuerorgan nach Anspruch 15, dadurch gekennzeichnet, daß das Zylinderteil (101) für den ersten und den zweiten Anschluß eine Dichtung (104A, 104B) aufweist, durch die jeweils diese Anschlüsse münden und an der der Kolben (103) gleitet.

17. Steuerorgan nach Anspruch 15 oder 16, dadurch gekennzeichnet, daß das Zylinderteil (101) als Fluidleitungs-Anschlüsse nur den ersten und den zweiten Anschluß (102A, 102B) und der Kolben (103) einen diametral verlaufenden Durchgang (108) aufweist.

18. Steuerorgan nach Anspruch 17, dadurch gekennzeichnet, daß das Zylinderteil (101) ferner noch eine axial zum ersten und zweiten Anschluß (102A, 102B) versetzte Montagebohrung (102D) für ein Rückschlagventil und der Kolben einen Durchgang mit einem diametral verlaufenden Abschnitt (108) aufweist, an den sich ein axialer Abschnitt (108A) und an diesen ein radialer Abschnitt (108B) anschließen, wobei die Mündungsöffnung des letzteren gegenüber der Montagebohrung für ein Rückschlagventil (102D) liegt, während die Mündungsöffnungen des diametral verlaufenden Abschnitts in der Durchlaßstellung gegenüber dem ersten und dem zweiten Anschluß (102A, 102B) zu liegen kommen.

19. Steuerorgan nach Anspruch 15 oder 16, dadurch gekennzeichnet, daß das Zylinderteil als Fluidleitungs-Anschlüsse den ersten und den zweiten Anschluß (102A, 102B) sowie einen dritten, axial zu ihnen versetzten Anschluß (102C) aufweist, der diesen relativ zu einer ersten (106B) der ringförmigen Vertiefungen der Bohrungswand des Zylinderteils, die den ersten und den zweiten Anschluß zwischen sich einschließen, gegenüberliegend angebracht ist, wobei eine dritte ringförmige Vertiefung (106D) auf der anderen Seite des dritten Anschlusses vorgesehen ist, und daß der Durchgang im Kolben einen diametral verlaufenden Abschnitt (108) aufweist, an den sich ein axialer Abschnitt (108A) und an diesen ein radialer Abschnitt (108B) anschließen, wobei in Schließstellung des Ventils die Auslaßöffnungen des diametral verlaufenden Abschnitts der ersten ringförmigen Vertiefung (106B) gegenüberliegen und die Auslaßöffnung des radialen Abschnitts der ringförmigen Vertiefung (106A) gegenüberliegt, die, relativ zum ersten und zweiten Anschluß gesehen, auf der der ersten ringförmigen Vertiefung gegenüberliegenden Seite angeordnet ist, wobei das Ventil zu beiden Seiten der Schließstellung eine Durchlaßstellung aufweist, in welcher der zweite Anschluß jeweils mit dem ersten bzw. dem dritten Anschluß verbunden ist, während der dritte bzw. erste Anschluß jeweils gesperrt ist.

20. Steuerorgan nach Anspruch 19, dadurch gekennzeichnet, daß das Zylinderteil (101) eine Montagebohrung für ein Rückschlagventil (102D) auf der dem dritten Anschluß bezüglich des ersten und zweiten Anschlusses gegenüberliegenden Seite aufweist, wobei in der Durchlaßstellung, in welcher der erste und der zweite Anschluß miteinander in Verbindung stehen, die Auslaßöffnung des radialen Abschnitts des Kolbendurchgangs gegenüber der Montagebohrung zu liegen kommt.

21. Steuerorgan nach Anpruch 19 oder 20, dadurch gekennzeichnet, daß das Zylinderteil eine Montagebohrung (102D′) für ein Rückschlagventil aufweist, die dem dritten Anschluß diametral gegenüberliegt.

22. Fluid-Steuerorgan nach einem der Ansprüche 2, 8, 10, 14, 18, 20 oder 21, dadurch gekennzeichnet, daß es ein Rückschlagventil (31, 40, 41) aufweist, das in der Montagebohrung (2D, 12D, 102D) montiert ist.

23. Steuerorgan nach Anspruch 22, dadurch gekennzeichnet, daß das Rückschlagventil (40) auf der Montagebohrung Mittel aufweist, die es öffnen, wenn in der Durchlaßstellung der Druck im Durchgang geringer als der Atmosphärendruck ist.

24. Steuerorgan nach Anspruch 22, dadurch gekennzeichnet, daß ein Rückschlagventil (29A) am ersten Anschluß angebracht ist, daß das Rückschlagventil (41) auf der Montagebohrung zum Anschluß an die Netzleitung (30A) stromaufwärts vom Rückschlagventil (29A) am ersten Anschluß angebracht ist, und daß das Rückschlagventil (41) auf der Montagebohrung Mittel aufweist, die es öffnen, wenn in der Durchlaßstellung der Druck im Durchgang größer als der Druck in der Netzleitung ist.

25. Steuerorgan nach Anspruch 24, dadurch gekennzeichnet, daß das Rückschlagventil auf der Montagebohrung ein Ventil (33), mittels dem eine Öffnung (34) zur Entlüftung an die Umgebung abgesperrt oder offengehalten werden kann, in die in der Durchlaßstellung der Durchgang des Schiebers mündet, und ein zylindrisches Bauteil (70) zum Anschluß an die Netzleitung umfaßt, in dem ein an das Ventil (33) angeschlossener Kolben (71) oder eine Membrane mit einer Fläche (51) ähnlich der Fläche (52) des Ventiles angebracht ist, wobei der Kalben bzw. die Membrane dann, wenn der Druck im Durchgang größer als der in der Netzleitung ist, eine Lage einnimmt, in der die Öffnung zum Entlüften an die Umgebung freigegeben wird.

26. Steuerorgan nach Anspruch 25, dadurch gekennzeichnet, daß das Rückschlagventil (41) auf der Montagebohrung ferner eine Feder (75) aufweist, welche die Membrane bzw. den Kolben (71) in eine Stellung vorspannt, in der das Ventil (33) die Öffnung (34) zur Entlüftung an die Umgebung freigibt.

27. Steuerorgan nach Anspruch 26, dadurch gekennzeichnet, daß das Rückschlagventil (29A) auf dem ersten Anschluß (2A, 12A, 102A) so eingestellt ist, daß es erst öffnet, wenn die Membrane bzw. der Kolben (71) eine Lage eingenommen hat, in der das Ventil die Öffnung zur Entlüftung an die Umgebung sperrt.

28. Steuerorgan nach Anspruch 22, dadurch gekennzeichnet, daß das Rückschlagventil (31) auf der Montagebohrung zum Anschluß an die Netzleitung (30A) und die Verbraucherleitung (30B) jeweils stromaufwärts bzw stromabwärts des Rückschlagventils am ersten Anschluß bzw. am zweiten Anschluß angebracht ist und Mittel aufweist, die es öffnen, wenn der Druck in der Verbraucherleitung (30B) größer als der in der Netzleitung (30A) ist.

29. Steuerorgan nach Anspruch 28, dadurch gekennzeichnet, daß das Rückschlagventil auf der Montagebohrung ein Ventil (33) zum Absperren oder Offenhalten einer Öffnung (34) zur Entlüftung an die Umgebung sowie ein zylindrisches Bauteil (35) aufweist, das über eine Membrane (36) oder einen Kolben, die bzw. der quer zu einem Schaft (37) des Ventils angeordnet und mit diesem verbunden ist, in zwei Kammern (38A, 38B) unterteilt ist, die jeweils an die Netzleitung (30A) bzw. an die Verbraucherleitung (30B) anschließbar sind, wobei die Membrane (36) bzw. der Kolben dann, wenn der Druck in der Verbraucherleitung größer als in der Netzleitung ist, eine Lage einnimmt, in der das Ventil (33) die Öffnung (34) zur Entlüftung an die Umgebung freigibt.

30. Steuerorgan nach Anspruch 29, dadurch gekennzeichnet, daß das Rückschlagventil (31) auf der Montagebohrung ferner eine Feder (39) aufweist, welche die Membrane (36) bzw. den Kolben in eine Stellung vorspannt, in der das Ventil (33) die Öffnung (34) zur Entlüftung an die Umgebung freigibt.

31. Steuerorgan nach Anspruch 30, bei dem ein Rückschlagventil (29A) am ersten Anschluß (2A, 12A, 102A) angeordnet ist, dadurch gekennzeichnet, daß das Rückschlagventil (29A) nur öffnet, wenn die Membrane (36) bzw. der Kolben eine Stellung eingenommen hat, in der das Ventil die Öffnung zur Entlüftung an die Umgebung verschließt.

32. Steuerorgan nach einem der Ansprüche 1 bis 31, dadurch gekennzeichnet, daß die Entlüftungsöffnung (7, 17, 107), mit der die Kammer versehen ist, direkt in die freie Luft mündet und ständig offen ist.

33. Steuerorgan nach einem der Ansprüche 1 bis 32, dadurch gekennzeichnet, daß die Entlüftungsöffnung (7, 17, 107), mit der die Kammer versehen ist, im unteren Teil des Steuerorgans liegt.

34. Steuerorgan nach einem der Ansprüche 1 bis 33, dadurch gekennzeichnet, daß es Mittel (9, 19) zur manuellen Betätigung des Schiebers aufweist.

35. Gerät zum Schutz gegen Fluidrücklauf, dadurch gekennzeichnet, daß es ein Steuerorgan nach einem der Ansprüche 1, 7, 8, 13, 14, 17 oder 18, gegebenenfalls kombiniert mit Anspruch 32 oder mit Anspruch 33, sowie ein Steuersystem (43) für den Schieber (3, 13) aufweist, das zum Anschluß jeweils an die Netzleitung bzw. die Verbraucherleitung stromaufwärts bzw. stromabwärts des Rückschlagventils (29A, 29B) am ersten bzw. zweiten Anschluß vorgesehen ist und Mittel aufweist, um den Schieber in die Schließstellung zu überführen, wenn der Druck der Verbraucherleitung höher als der in der Netzleitung ist.

36. Gerät nach Anspruch 35, dadurch gekennzeichnet, daß das Steuersystem (43) ein zylindrisches Teil (44) aufweist, in dem ein Kolben (45) beweglich angebracht ist, der an jedem seiner Enden eine Endfläche (46A, 46B) aufweist, deren jede jeweils in einer mit der Netzleitung bzw. der Verbraucherleitung in Verbindung stehenden Kammer (47A, 47B) bewegbar ist, wobei der Kolben mit dem Schieber (3, 13, 103) verbunden ist und dann, wenn der Druck in der Verbraucherleitung (30B) größer als der in der Netzleitung (30A) ist, eine Stellung einnimmt, in der sich der Schieber in Schließstellung befindet.

37. Gerät nach Anspruch 36, dadurch gekennzeichnet, daß das Steuersystem (43) ferner eine Feder (50) aufweist, die den Kolben (45) in eine Stellung hin vorspannt, in welcher sich der Schieber in Schließstellung befindet, derart, daß der Schieber in die Schließstellung übergeht, wenn die Differenz zwischen dem Druck in der Netzleitung und dem in der Verbraucherleitung kleiner als ein vorgewählter unterer Schwellwert wird.

## Claims

1. A fluid control member adapted to be disposed between a fluid supply network and a consumer installation and comprising: a body (1) having at least a first port (2A, 12A, 102A) adapted to be connected to a supply pipe (30A) and a second port (2B, 12B, 102B) adapted to be connected to an installation pipe (30B); a movable closure member (3) disposed in the body (1) and allowing a valve closure position in which it closes said ports and a valve open position in which said ports communicate via a passage in said closure member (3); and sealing means for producing by contact zones ensuring in the valve closure position the hermeticity of the closure of each of the first and second ports respectively, characterized in that it also comprises: a chamber (6, 16; 106A, 106B, 106C) having a vent (7, 17, 107) venting to atmosphere for evacuating any leakages at said hermetic zones, said chamber being disposed between said hermetic zones when the valve closure member is in the closure position; and a non-return valve (29A, 29B) disposed on each of said first and second ports and closing in the direction of the supply or opening in the direction of the installation.

2. A member according to claim 1, characterized in that said body also comprises a port (2D, 12D, 102D) for the mounting of a vacuum-breaker valve, the closure member (3, 13, 103) comprising a passage adapted to connect in the valve open position said port for the mounting of a vacuum-breaker to said first and second ports.

3. A member according to either of claims 1 or 2, characterized in that said member also comprises a third port (2C, 12C, 102C) adapted to be connected to a fluid pipe; the closure member comprises a passage so adapted that said third port is also closed in the valve closure position and that the closure member has on either side of the closure position a valve open position in which said second port (2B, 12B, 102B) is respectively brought into communication with the first or the third port, while the third or the first port is respectively closed; and said chamber (6, 16, 106A, 106B, 106C) is also disposed in the valve closure position between at least the zones respectively sealing the first and the third ports or the zones respectively sealing the second and the third ports.

4. A member according to any of claims 1 to 3, characterized in that the closure member (3, 13, 103) is so mounted in the body (1, 11, 101) as to maintain contact during its movement with the periphery of the orifices via which at least the first and second ports respectively discharge into the body.

5. A member according to claim 1, characterized in that said body is a shell casing (1); said closure member is a turning member (3) mounted in said shell via sleeves (4A, 4B) coaxial with the ports which the shell comprises; and said chamber (6) is a space between the shell casing and the turning member, due to the fact that said sleeves project in relation to the inside wall of the shell casing.

6. A member according to claim 5, characterized in that said sleeves (4A, 4B) have a thickness at least equal to the diameter of the passage in the turning member.

7. A member according to claims 5 or 6, characterized in that said shell casing (1) comprises as ports adapted to be connected to a fluid pipe only said first and second ports (2A, 2B), said ports being diametrically opposite, and said turning member (3) comprising a diametrical passage (8).

8. A member according to claim 7, characterized in that said shell casing also comprises a port (2D) for mounting a vacuumbreaker valve which is disposed on a diameter transverse to that on which said first and second ports (2A, 2B) are disposed, and the passage in the turning member is T-shaped - i.e., it also comprises a radial portion (8B) connecting transversely with the centre of said diametrical passage (8), the orifice of said radial portion being disposed in the valve closure position between the port (2D) for mounting a vacuum-breaker and one of said first and second ports (2A, 2B).

9. A member according to claims 5 or 6, characterized in that said shell casing comprises as ports adapted to be connected to a fluid pipe said first and second ports (2A, 2B) and also a third port (2C), the first and third ports (2A, 2C) being diametrically opposite on a first diameter and the second port (2B) being disposed on a diameter transverse to said first diameter, and the passage in the turning member (3) is L-shaped, each of the orifices of said passage being disposed in the valve closure position between the second port (2B) and one of the first or third ports (2A, 2C).

10. A member according to claims 5 or 6, characterized in that said shell casing (1) comprises as ports adapted to be connected to a fluid pipe said first and second ports (2A, 2B) and also a third port (2C); it comprises a port (2B) for the mounting of a vacuum-breaker valve, the first and second ports being diametrically opposite on a first diameter and the third port being diametrically opposite to the port for the mounting of a vacuum-breaker on a diameter transverse to said first diameter; the passage of the turning member (3) is T-shaped, with a diametrical portion (8) to whose centre a radial part (8B) is transversely connected, the orifice of said radial part being disposed in the valve closure position between the port (2D) for the mounting of a vacuum-breaker and the second port (2B), a first orifice of the diametrical part between the first port and the port for the mounting of a vacuum-breaker (2A, 2D) and the second orifice of the diametrical part between the second and third ports (2B, 2C).

11. A member according to claim 1, characterized in that said body is a cylinder (11) and said closure member is a piston (13) sliding in said cylinder, and said chamber (16) is an annular recess in the inside wall of the cylinder between said first and second ports (12A, 12B), said first and second ports being formed in the side wall of said cylinder and being axially offset in relation to one another.

12. A member according to claim 11, characterized in that said piston comprises an O-ring seal (14A, 14D) on either side of each of the orifices of its passage.

13. A member according to claims 11 or 12, characterized in that said cylinder comprises as ports to be connected to a fluid pipe only said first and second ports (12A, 12B), and said piston comprises a passage having an axial portion (18A) to which two radial portions (18B, 18C) are connected.

14. A member according to claim 13, characterized in that said cylinder also comprises a port (12D) for the mounting of a vacuum-breaker valve which is centred on an axis contained in the same plane transverse to the cylinder as the axis of the first port (12A); and the passage in the piston comprises an annular groove (25) formed in its lateral surface and centred on a plane transverse to the piston containing the axis of one of the radial portions (18B), the latter being connected to the first port (12A) in the flow position.

15. A member according to claim 1, characterized in that said body is a cylinder (101) in whose side wall the first and second ports (102A, 102B) adapted to be connected to a fluid pipe are disposed diametrically opposite, said closure member is a piston (103) sliding in said cylinder, and said chamber comprises an annular recess (106A, 106B) in the inside wall of the cylinder on either side of said first and second ports, and also a lower longitudinal recess (106C) into which the annular recesses (106A, 106B) and the venting orifice (107) discharge.

16. A member according to claim 15, characterized in that the cylinder (101) comprises for each of the first and second ports a seal (104A, 104B) via which they respectively discharge and against which the piston (103) slides.

17. A member according to claims 15 or 16, characterized in that said cylinder (101) comprises as ports adapted to be connected to a fluid pipe only said first and second ports (102A, 102B), and said piston (103) comprises a diametrical passage (108).

18. A member according to claim 17, characterized in that said cylinder (102) also comprises a port (102D) for the mounting of a vacuum-breaker valve which is axially offset in relation to said first and second ports (102A, 102B), and said piston comprises a passage having a diametrical portion (108) to which an axial portion (108A) is connected to which a radial portion (108B) is connected, the orifice of the latter facing the port (102D) for the mounting of a vacuum-breaker, while the orifices of the diametrical portion face the first and second ports (102A, 102B) in the valve open position.

19. A member according to claims 15 or 16, characterized in that said cylinder comprises as ports adapted to be connected to a fluid pipe said first and second ports (102A, 102B) and also a third port (102C) axially offset in relation thereto and disposed opposite them relative to a first annular recess (106B) in the inside wall of the cylinder enclosing the first and second ports, a third annular recess (106D) being formed on the other side of the third port, and the passage in the piston comprises a diametrical portion (108) to which an axial portion (108A) is connected to which a radial portion (108B) is connected, the orifices of the diametrical portion facing said first annular recess (106B), while the orifice of the radial portion faces the annular recess (106A) situated opposite the first annular recess in relation to the first and second ports, in a valve closure position on either side of which it allows an open position in which the second port is in communication with respectively the first and third port, while respectively the third and first ports are closed.

20. A member according to claim 19, characterized in that said cylinder (101) comprises a port (102D) for the mounting of a vacuum-breaker valve situated opposite the third port in relation to the first and second ports, which are faced in the open position of the valve by the orifice of the radial portion of the passage in the piston, the first and second ports being in communication in said open position.

21. A member according to claims 19 or 20, characterized in that said cylinder comprises a port (102D′) for the mounting of a vacuum-breaker valve diametrically opposite to said third port.

22. A fluid control member according to any of claims 2, 8, 10, 14, 18, 20 or 21, characterized in that it comprises a vacuum-breaker valve (31, 40, 41) mounted in said port (2D, 12D, 102D) for the mounting of a vacuum-breaker.

23. A fluid control member according to claim 22, characterized in that said vacuum-breaker valve (41) comprises means for opening when in the valve open position the pressure in the passage is lower than atmospheric pressure.

24. A fluid control member according to claim 22, characterized in that a non-return valve (29a) is mounted on said first port, said vacuum-breaker valve (41) is adapted to be connected to the network pipe (30A) upstream of the non-return valve (29a) mounted on the first port, and the vacuum-breaker valve (41) comprises means for opening said valve when in the valve open position the pressure in the passage is higher than the pressure in the network pipe.

25. A member according to claim 24, characterized in that said vacuum-breaker valve comprises a valve member (33) selectively closing or leaving open a port (34) venting to atmosphere into which the passage of the closure member opens in the valve open position, and a cylinder (70) adapted to be connected to the supply pipe, which contains a piston (71) or a diaphragm coupled to said valve member (33) and having a surface (51) similar to the surface area (52) of the valve member, the piston or the diaphragm adapting when the pressure in the passage is higher than that in the supply pipe a position in which the valve member opens the venting port.

26. A member according to claim 25, characterized in that said vacuum-breaker valve (41) also comprises a spring (75) urging said diaphragm or said piston (71) towards a position in which the valve member (33) opens the port (34) venting to atmosphere.

27. A member according to claim 26, characterized in that the non-return valve (29a) disposed on the first port (2A, 12A, 102A) is so calibrated as to open only after said diaphragm or said piston (71) has moved into a position in which the valve member closes the port venting to atmosphere.

28. A member according to claim 22, characterized in that said vacuum-breaker valve (31) is adapted to be connected to said supply and installation pipes (30A, 30B) respectively upstream and downstream of the non-return valve mounted on the first or second port, the valve comprising means for opening the valve when the pressure in the installation pipe (30B) is higher than the pressure in the supply pipe (30A).

29. A member according to claim 23, characterized in that said vacuum-breaker valve comprises a valve member (33) selectively closing or leaving open a port (34) venting to atmosphere and a cylinder (35) divided, by a diaphragm (36) or a piston disposed transversely to a rod (37) of the valve member and coupled to said rod, into two chambers (38A, 38B) respectively adapted to be connected to the supply pipe (30A) and to the installation pipe (30B), the diaphragm (36) or the piston adopting when the pressure in the installation pipe is higher than that in the supply pipe a position in which the valve member (33) opens the port (34) venting to atmosphere.

30. A member according to claim 29, characterized in that said vacuum-breaker valve (31) also comprises a spring (39) urging said diaphragm (36) or said piston towards a position in which the valve member (33) opens the port (34) venting to atmosphere.

31. A member according to claim 30, wherein a non-return valve (29a) is mounted on the first port (2A, 12A, 102A), characterized in that the non-return valve (29a) is so calibrated as to open only after said diaphragm (36) or said piston has moved into a position in which the valve member closes the port venting to atmosphere.

32. A member according to any of claims 1 to 31, characterized in that said vent (7, 17, 107) with which the chamber is provided directly discharges to atmosphere and is permanently open.

33. A member according to any of claims 1 to 32, characterized in that said vent (7, 17, 107) with which the chamber is provided is situated in the lower part of the member.

34. A member according to any of claims 1 to 33, characterized in that it comprises means (9, 19) for operating the closure member manually.

35. A device giving protection against backflows of liquid, characterized in that it comprises: a member according to any of claims 1, 7, 8, 13, 14, 17 or 18, possibly combined with claims 32 or 33, and also a control system (43) for the closure member (3, 13) which is adapted to be connected respectively to the supply pipe and to the installation pipe respectively upstream and downstream of the non-return valve (29a, 29b) mounted on the first or second port, comprising means for moving the closure member into the closure position when the pressure in the installation pipe is higher than the pressure in the supply pipe.

36. A device according to claim 35, characterized in that said control system (43) comprises a cylinder (44) in which a piston (45) slides having at each of its ends a movable surface (46A, 46B) in a chamber (47A, 47B) put into communication respectively with the supply pipe and with the installation pipe, said piston being coupled to the closure member (3, 13, 103) and assuming when the pressure in the installation pipe (30B) is higher than the pressure in the supply pipe (30A) a position in which the closure member is in the closed position.

37. A device according to claim 36, characterized in that said control system (43) also comprises a spring (50) urging said piston (45) into a position in which the closure member is in the closure position, so that the closure member moves into the closed position when the difference between the pressure in the supply pipe and that in the installation pipe drops below a predetermined low threshold.
